# EUROPEAN PATENT APPLICATION

(11) **EP 4 586 688 A1**
(43) Date of publication of application: **16.07.2025**
(21) Application number: 23870230.2
(22) Date of filing: 06.09.2023
(51) Int. Cl.: H04W 36/08

(54) **CELL HANDOVER METHOD AND APPARATUS**

(30) Priority: 28.09.2022 CN 202211194024; 15.02.2023 CN 202310140798
(71) Applicant: Huawei Technologies Co., Ltd., Shenzhen, Guangdong 518129 (CN)
(72) Inventor: ZHONG, Yaping, Shenzhen, Guangdong 518129 (CN); HU, Xingxing, Shenzhen, Guangdong 518129 (CN)
(74) Representative: Maiwald GmbH
(86) International application number: PCT/CN2023/117299
(87) International publication number: WO 2024/066991

(57) **Abstract**

This application provides a cell handover method and an apparatus, so that a key of a terminal device can be aligned with keys of a core network device and an access network device. The method includes: A core network device receives a first handover request message from a first access network device, where the first handover request message includes identification information of a second access network device and first information, and the first information indicates that a type of a handover of a terminal device to the second access network device is a conditional handover; the core network device sends first security information and the first information to the second access network device; the core network device receives a second handover request message from the first access network device, where the second handover request message includes identification information of a third access network device; and if the identification information of the third access network device is the same as the identification information of the second access network device, the core network device sends the first security information to the third access network device.

## Description

This application claims priority to Patent Application No. 202211194024.6, filed with the China National Intellectual Property Administration on September 28, 2022 and entitled "CELL HANDOVER METHOD AND APPARATUS", and to Patent Application No. 202310140798.9, filed with the China National Intellectual Property Administration on February 15, 2023 and entitled "CELL HANDOVER METHOD AND APPARATUS", which are incorporated herein by reference in their entireties.

### TECHNICAL FIELD

This application relates to the communication field, and more specifically, to a cell handover method and an apparatus.

### BACKGROUND

In a conditional handover (conditional handover, CHO) mechanism, a terminal device may use, as a target cell, a candidate cell that meets a CHO trigger condition, and initiate a random access procedure to a target access network device, to be handed over to the target cell.

Regardless of a conventional handover or a CHO, security information needs to be updated and synchronized between a terminal device, a target access network device, and a core network, to maintain normal communication of the terminal device after the handover. For the CHO, a more efficient security information update and synchronization solution needs to be designed.

### SUMMARY

This application provides a cell handover method and an apparatus, so that a key of a terminal device can be aligned with keys of a core network device and an access network device, to improve communication reliability.

According to a first aspect, a cell handover method is provided. The method may be performed by a chip or a chip system on a network device side. The method includes: A core network device receives a first handover request message from a first radio access network device, where the first handover request message includes identification information of a second access network device and first information, and the first information indicates that a type of a handover of a terminal device to the second access network device is a conditional handover or an enhanced handover; the core network device sends first security information and the first information to the second access network device; the core network device receives a second handover request message from the first access network device, where the second handover request message includes identification information of a third access network device; and if the identification information of the third access network device is the same as the identification information of the second access network device, the core network device sends the first security information to the third access network device.

Based on the foregoing technical solution, if the core network device has derived security information/key information for a same access network device, the core network device does not generate new security information/key information, so that a quantity of times the core network device derives security information can be reduced, thereby preventing a key of the terminal device from being misaligned with keys of the core network device and the third access network device because a value of an NCC is reversed to 0.

With reference to the first aspect, in some implementations of the first aspect, the method further includes: If the identification information of the third access network device is different from the identification information of the second access network device, the core network device sends second security information to the third access network device.

Based on the foregoing solution, the core network device generates same security information for different access network devices (target base stations) of a same terminal device, so that a quantity of times the core network device derives security information can be reduced, and a value of an NCC can be prevented from being reversed to 0 because a quantity of times the core network device receives a handover request message increases, thereby preventing a key determined by the terminal device from being misaligned with keys of the core network device and the third access network device.

With reference to the first aspect, in some implementations of the first aspect, the method further includes: If the identification information of the third access network device is different from the identification information of the second access network device, the core network device sends the first security information to the third access network device.

With reference to the first aspect, in some implementations of the first aspect, the second handover request message further includes second information, and the second information indicates that a type of a handover of the terminal device to the third access network device is a conditional handover.

With reference to the first aspect, in some implementations of the first aspect, the first security information includes first key information, and the second security information includes second key information.

With reference to the first aspect, in some implementations of the first aspect, the first handover request message further includes a first identifier, and the first identifier is used to identify the first handover request message; and the second handover request message further includes a second identifier, and the second identifier is used to identify the second handover request message.

With reference to the first aspect, in some implementations of the first aspect, that the core network device sends first security information and the first information includes: The core network device sends the first security information, the first information, and the first identifier; and that the core network device sends second security information to the third radio access network device includes: The core network device sends the second security information and the second identifier to the third radio access network device.

According to a second aspect, a cell handover method is provided. The method may be performed by a chip or a chip system on a network device side. The method includes: A core network device receives a first handover request message from a first access network device, where the first handover request message includes identification information of a service of a second access network device and first information, and the first information indicates that a type of a handover of a terminal device to the second access network device is a conditional handover; and the core network device sends first security information and the first information to the second access network device, where the first security information includes a first value of a first next hop chaining count NCC and first indication information, and the first indication information is used by the terminal device to determine a key of the second access network device; or the first security information includes the first value of the first NCC and a second value of a second NCC, and a maximum value of the second NCC is greater than a maximum value of the first NCC.

Based on the foregoing technical solution, each time the core network device receives a handover request message, the core network device derives security information (a key NH and a value of an NCC) once, and sends, to a target base station (the second access network device/the third access network device), the security information and indication information indicating a round of generating the value of the NCC. The target base station sends the value of the NCC and the indication information to the terminal device. The terminal device may determine, based on the indication information and the value of the NCC, a key consistent with a key of the target base station. Therefore, a key of the terminal device can be prevented from being misaligned with keys of the core network device and the target base station.

Alternatively, each time the core network device receives a handover request message, the core network device derives security information (a key NH, a value of the first NCC, and a value of the second NCC) once, and sends the security information to a target base station (the second access network device/the third access network device). The target base station sends the value of the second NCC in the security information to the terminal device. Because a value range of the second NCC is greater than a value range of the first NCC, as a quantity of handover requests increases, a probability that the value of the second NCC is reversed to 0 is lower than a probability that the value of the first NCC is reversed to 0. Therefore, there is a lower probability that a key determined by the terminal device based on the value of the second NCC is inconsistent with a key of the target base station, thereby preventing a key of the terminal device from being misaligned with keys of the core network device and the target base station.

With reference to the second aspect, in some implementations of the second aspect, the first indication information is an extended bit of the first NCC.

With reference to the second aspect, in some implementations of the second aspect, the first indication information indicates a round of deriving the first NCC.

According to a third aspect, a cell handover method is provided. The method may be performed by a chip or a chip system on a network device side. The method includes: A core network device receives a handover request message from a first access network device, where the handover request message includes identification information of a second access network device and first information, and the first information indicates that a type of a handover of a terminal device to the second access network device is a conditional handover; and if the core network device updates a key K_{AMF}, the core network device sends a handover reject message to the first access network device.

Based on the foregoing technical solution, when the core network device receives the CHO request message from the first radio access network device, if the core network device updates the key K_{AMF}, but the core network device has not performed key synchronization with the terminal device and the first radio access network device, the core network device sends the handover reject message to the first radio access network device. This can prevent a key of the terminal device from being synchronized with a key of the core network device in a CHO procedure, thereby preventing the key of the terminal device from being misaligned with the key of the core network device.

With reference to the third aspect, in some implementations of the third aspect, the handover reject message carries third indication information, and the third indication information indicates a reject cause.

With reference to the third aspect, in some implementations of the third aspect, the reject cause includes: The core network device is to perform a context change procedure of the terminal device or the core network device is to perform key synchronization with the terminal device.

With reference to the third aspect, in some implementations of the third aspect, after the core network device sends the handover reject message to the first access network device, the method further includes: The core network device sends a context update request message of the terminal device to the first access network device, where the context update request message of the terminal device includes first security information, and the first security information is determined by the core network device based on an updated key K_{AMF}.

According to a fourth aspect, a cell handover method is provided. The method may be performed by a chip or a chip system on a network device side. The method includes: A first access network device sends a handover request message to a core network device, where the handover request message includes identification information of a second access network device and first information, and the first information indicates that a type of a handover of a terminal device to the second access network device is a conditional handover; and the first access network device receives a handover reject message from the core network device. For beneficial effects, refer to the third aspect.

With reference to the fourth aspect, in some implementations of the fourth aspect, the handover reject message carries third indication information, and the third indication information indicates a reject cause.

With reference to the fourth aspect, in some implementations of the fourth aspect, the reject cause includes: The core network device is to perform a context change procedure of the terminal device or the core network is to perform key synchronization with the terminal device.

With reference to the fourth aspect, in some implementations of the fourth aspect, after the first access network device receives the handover reject message from the core network device, the method further includes: The first access network device receives a context update request message of the terminal device from the core network device, where the context update request message of the terminal device includes first security information.

According to a fifth aspect, a cell handover method is provided. The method may be performed by a chip or a chip system on a network device side. The method includes: A core network device receives a handover request message from a first access network device, where the handover request message includes identification information of a second access network device and first information, and the first information indicates that a type of a handover of a terminal device to the second access network device is a conditional handover; and if the core network device determines to derive a key K_{AMF}, the core network device sends first security information and the first information to the second access network device, where the first security information is determined based on a key K_{AMF} used before the derivation.

Based on the foregoing technical solution, when the core network device receives the CHO request message from the first access network device (a source base station), if the core network device determines that a new key K_{AMF} needs to be horizontally derived, the core network device determines the first security information by using the key K_{AMF} used before the derivation, and sends the first security information to the second access network device (a target base station). After the terminal device completes the CHO handover to the second access network device, the core network device horizontally derives a new key K_{AMF}, and determines second security information based on the new key K_{AMF}. The core network device sends a context update request message of the terminal device to the second access network device, where the context update request message of the terminal device includes the second security information. In this solution, a key of the terminal device can be prevented from being misaligned with keys of the target base station and the core network device because the terminal device does not know a quantity of key K_{AMF} derivation times.

With reference to the fifth aspect, in some implementations of the fifth aspect, the method further includes: The core network device receives a handover notify message from the second access network device, where the handover notify message indicates that the terminal device has completed the handover to the second access network device; the core network device derives the new key K_{AMF}; and the core network device sends the context update request message of the terminal device to the second access network device, where the context update request message of the terminal device includes the second security information, and the second security information is determined by the core network device based on the new key K_{AMF}.

With reference to the fifth aspect, in some implementations of the fifth aspect, the method further includes: If the core network device determines not to derive a key K_{AMF}, the core network device sends the first security information and the first information to the second access network device.

With reference to the fifth aspect, in some implementations of the fifth aspect, the first security information includes first key information, and the second security information includes second key information.

According to a sixth aspect, a communication apparatus is provided, including a unit configured to implement the function in the method according to any one of the first aspect or the possible implementations of the first aspect.

According to a seventh aspect, a communication apparatus is provided, including a unit configured to implement the function in the method according to any one of the second aspect or the possible implementations of the second aspect.

According to an eighth aspect, a communication apparatus is provided, including a unit configured to implement the function in the method according to any one of the third aspect or the possible implementations of the third aspect.

According to a ninth aspect, a communication apparatus is provided, including a unit configured to implement the function in the method according to any one of the fourth aspect or the possible implementations of the fourth aspect.

According to a tenth aspect, a communication apparatus is provided, including a unit configured to implement the function in the method according to any one of the fifth aspect or the possible implementations of the fifth aspect.

According to an eleventh aspect, a communication apparatus is provided, including a processor and a memory. The memory is configured to store a computer program, and the processor is configured to execute the computer program stored in the memory, to enable the communication apparatus to perform the method according to any one of the first aspect or the possible implementations of the first aspect.

According to a twelfth aspect, a communication apparatus is provided, including a processor and a memory. The memory is configured to store a computer program, and the processor is configured to execute the computer program stored in the memory, to enable the communication apparatus to perform the method according to any one of the second aspect or the possible implementations of the second aspect.

According to a thirteenth aspect, a communication apparatus is provided, including a processor and a memory. The memory is configured to store a computer program, and the processor is configured to execute the computer program stored in the memory, to enable the communication apparatus to perform the method according to any one of the fourth aspect or the possible implementations of the fourth aspect.

According to a fourteenth aspect, a communication system is provided, including the terminal device, the core network device, the first access network device, the second access network device, and the third access network device in the methods according to the first aspect to the sixth aspect.

According to a fifteenth aspect, a computer-readable storage medium is provided. The computer-readable medium stores a computer program, and when the computer program is run on a computer, the computer is enabled to perform the method according to any one of the first aspect to the sixth aspect or possible implementations of the first aspect to the sixth aspect.

According to a sixteenth aspect, a computer program product including instructions is provided. When the instructions are executed by a computer, a communication apparatus is enabled to implement the method according to any one of the first aspect to the sixth aspect or possible implementations of the first aspect to the sixth aspect.

The solutions provided in the sixth aspect to the sixteenth aspect are used to implement or cooperatively implement the methods provided in the first aspect to the fifth aspect, and therefore can achieve beneficial effects the same as or corresponding to those achieved by the first aspect to the fifth aspect. Details are not described herein again.

### BRIEF DESCRIPTION OF DRAWINGS

FIG. 1 is a diagram of a network architecture to which embodiments of this application are applicable;
FIG. 2 is a schematic interaction flowchart of a conventional cell handover;
FIG. 3 is a schematic interaction flowchart of a conditional handover in a protocol R17;
FIG. 4 is a diagram of an architecture of layered key derivation;
FIG. 5 is a diagram of horizontal key derivation and vertical key derivation;
FIG. 6 is a diagram of a key update without a change of K_{AMF} in a conventional NG handover process;
FIG. 7 is a schematic interaction flowchart of a key update in an NG-interface-based CHO handover process;
FIG. 8 is a diagram of a key update with activation of new K_{AMF} in a conventional NG handover process;
FIG. 9 is a schematic interaction flowchart of a cell handover method according to an embodiment of this application;
FIG. 10 is a schematic interaction flowchart of an example of a cell handover method according to an embodiment of this application;
FIG. 11 is a schematic interaction flowchart of another example of a cell handover method according to an embodiment of this application;
FIG. 12 is a schematic interaction flowchart of another example of a cell handover method according to an embodiment of this application;
FIG. 13 is a schematic interaction flowchart of another cell handover method according to an embodiment of this application;
FIG. 14 is a schematic interaction flowchart of an example of a cell handover method according to an embodiment of this application;
FIG. 15 is a schematic interaction flowchart of another cell handover method according to an embodiment of this application;
FIG. 16 is a schematic interaction flowchart of another cell handover method according to an embodiment of this application;
FIG. 17 is a schematic interaction flowchart of an example of a cell handover method according to an embodiment of this application;
FIG. 18 is a schematic interaction flowchart of another cell handover method according to an embodiment of this application;
FIG. 19 is a schematic interaction flowchart of an enhanced handover method according to an embodiment of this application; and
FIG. 20 to FIG. 24 are block diagrams of communication apparatuses according to embodiments of this application.

### DESCRIPTION OF EMBODIMENTS

The following describes technical solutions of this application with reference to accompanying drawings.

Embodiments of this application may be applied to various communication systems, such as a wireless local area network (wireless local area network, WLAN) system, a narrowband internet of things (narrowband internet of things, NB-IoT) system, a global system for mobile communications (global system for mobile communications, GSM), an enhanced data rates for GSM evolution (enhanced data rates for GSM evolution, EDGE) system, a wideband code division multiple access (wideband code division multiple access, WCDMA) system, a code division multiple access 2000 (code division multiple access 2000, CDMA2000) system, a time division-synchronous code division multiple access (time division-synchronous code division multiple access, TD-SCDMA) system, a long term evolution (long term evolution, LTE) system, satellite communication (non-terrestrial network, NTN), a sidelink (sidelink, SL), a 4th generation (4th generation, 4G) system, a 5th generation (5th generation, 5G) system, and a new communication system that appears in the future. The communication system includes communication devices, and wireless communication may be performed between the communication devices by using an air interface resource. The communication devices may include a network device and a terminal device. The air interface resource may include at least one of a time domain resource, a frequency domain resource, a code resource, and a spatial resource.

The terminal device in embodiments of this application may include various handheld devices, vehicle-mounted devices, wearable devices, computing devices, or other processing devices connected to a wireless modem, where the devices have a wireless communication function. The terminal may be a subscriber unit (subscriber unit), user equipment (user equipment, UE), a cellular phone (cellular phone), a smartphone (smartphone), a wireless data card, a personal digital assistant (personal digital assistant, PDA) computer, a tablet computer, a wireless modulator and demodulator (modulator and demodulator, modem), a laptop computer (laptop computer), a machine type communication (machine type communication, MTC) terminal, a wireless terminal in self driving (self driving), or the like. The user equipment includes vehicle user equipment. With emergence of an internet of things (internet of things, IOT) technology, more devices that previously do not have a communication function, for example, but not limited to, a household appliance, a transportation vehicle, a tool device, a service device, and a service facility, start to obtain a wireless communication function by being configured with a wireless communication unit, to access a wireless communication network to accept remote control. Such a device has the wireless communication function because the device is configured with the wireless communication unit, and therefore also belongs to a scope of wireless communication devices. In addition, the terminal device may also be referred to as a mobile station (mobile station, MS), mobile equipment (mobile equipment, ME), a mobile terminal, a wireless terminal, a handheld device (handset), a client, a virtual reality (virtual reality, VR) terminal device, an augmented reality (augmented reality, AR) terminal device, a wireless terminal in industrial control, a wireless terminal in self driving, a wireless terminal in a remote medical (remote medical), a wireless terminal in a smart grid (smart grid), a wireless terminal in transportation safety (transportation safety), a wireless terminal in a smart city (smart city), a wireless terminal in a smart home (smart home), or the like. In embodiments of this application, an apparatus configured to implement a function of the terminal device may be a terminal device, or may be an apparatus, for example, a chip system, that can support the terminal device in implementing the function. The apparatus may be installed in the terminal device. In embodiments of this application, the chip system may include a chip, or may include a chip and another discrete component.

For example, the network device is a device in a wireless network, such as a radio access network (radio access network, RAN) node through which the terminal device accesses the wireless network. Currently, examples of some RAN nodes are a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, WiFi) access point (access point, AP), and an integrated access and backhaul (integrated access and backhaul, IAB) node. In a network structure, the network device may include a central unit (central unit, CU) node, a distributed unit (distributed unit, DU) node, or a RAN device including a CU node and a DU node. In another network structure, the central unit CU node may be divided into a control plane (CU-CP) and a user plane (CU-UP). The CU-CP is responsible for a control plane function, and mainly includes radio resource control (radio resource control, RRC) and a packet data convergence protocol (packet data convergence protocol, PDCP)-C. The PDCP-C is mainly responsible for data encryption/decryption, integrity protection, data transmission, and the like on the control plane. The CU-UP is responsible for a user plane function, and mainly includes a service data adaptation protocol (service data adaptation protocol, SDAP) and a PDCP-U. The SDAP is mainly responsible for processing data of a core network and mapping a data flow (flow) to a bearer. The PDCP-U is mainly responsible for encryption/decryption, integrity protection, header compression, sequence number maintenance, data transmission, and the like on the data plane. The CU-CP and the CU-UP are connected through an interface E1. The CU-CP is connected to the core network through an NG interface on behalf of the CU. The CU-CP is connected to the DU through an F1-C (control plane). The CU-UP is connected to the DU through an F1-U (user plane). Certainly, in another possible implementation, the PDCP-C is alternatively in the CU-UP.

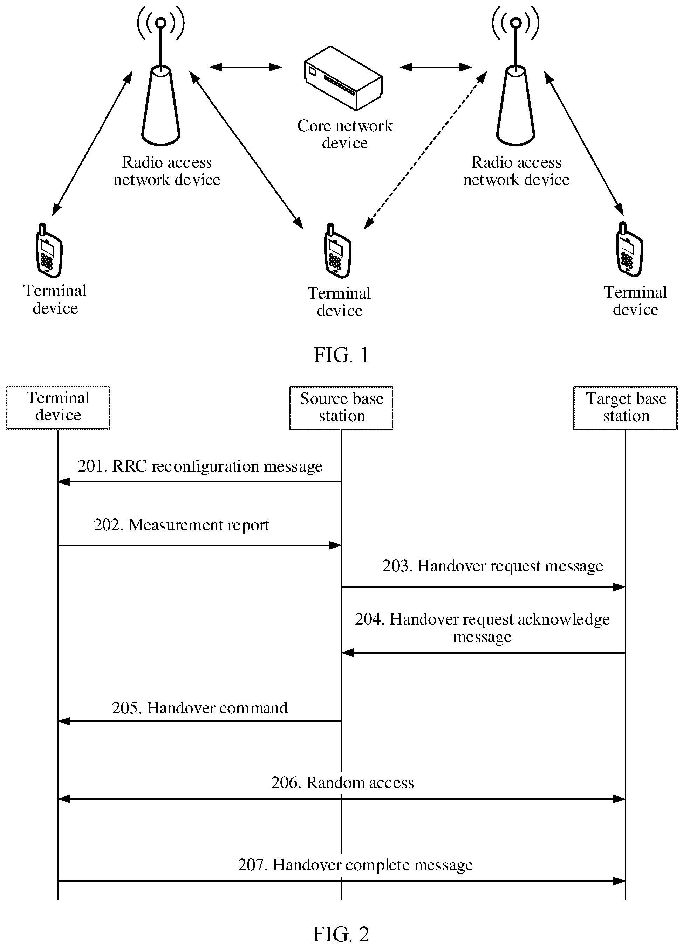

FIG. 1 is a diagram of a network architecture to which embodiments of this application are applicable. The network architecture includes a core network device, an access network device, and a terminal device. One or more access network devices may be included. The access network devices in embodiments of this application may be base stations. The base stations include a source base station and a target base station. The source base station is a base station accessed by the terminal device before a cell handover, and the target base station is a base station accessed by the terminal device after the cell handover. The core network device may generate a key used to establish a connection and perform communication between the terminal device and the access network device. The core network device in embodiments of this application may be an access and mobility management function (access and mobility management function, AMF).

To facilitate understanding of embodiments of this application, technical solutions related to embodiments of this application are briefly described.

### 1. Satellite communication

Satellite communication has a wide coverage area, a long communication distance, high reliability, high flexibility, a high throughput, and other advantages. Satellite communication is not affected by a geographical environment, a climatic condition, or a natural disaster, and has been widely applied to aviation communication, maritime communication, military communication, and other fields. A satellite may be introduced to a 5G system to provide communication services for areas difficult to be covered by a terrestrial network, such as an ocean and a forest, enhance reliability of 5G communication, for example, provide communication services with higher stability and quality for a train, an airplane, and users on these transportation vehicles, and further provide more data transmission resources to support more connections.

Satellite communication may be referred to as non-terrestrial communication. Thanks to a current concept of "any time, any place" communication, status of a satellite communication network is further improved in the future. Usually, a higher orbit of a satellite indicates a larger coverage area but a longer communication delay of the satellite. Generally, running orbits of satellites can be classified into the following three types based on altitudes:
(1) Low earth orbit (low earth orbit, LEO): An altitude of the orbit is 160 km to 2000 km.
(2) Medium earth orbit (medium earth orbit, MEO): An altitude of the orbit is 2000 km to 35786 km.
(3) Geostationary earth orbit (geostationary earth orbit, GEO): An altitude of the orbit is 35786 km, and a location, relative to the earth, of a satellite running in this orbit is not affected by rotation of the earth.

The network device in embodiments of this application may be a network device on a satellite. The satellite in this application may be a satellite running in a low-earth orbit, may be a satellite running in a geostationary orbit, or may be extended to a satellite running in a medium-earth orbit or another mobile network device. The network device in embodiments of this application may alternatively be a network device on the ground. This is not specifically limited in this application. In addition, for ease of description, "a network device on a satellite" is replaced with "a satellite" for description subsequently in this application. Communication between a terminal device and a satellite in this application is actually communication between the terminal device and a network device on the satellite.

In a satellite communication system, a satellite moves at a high speed. For a GEO satellite, because the GEO satellite is stationary relative to the earth, a ground area covered by the GEO satellite is unchanged. For a non-GEO satellite, because the satellite moves at a high speed relative to the earth, a ground area covered by the satellite is changed. Therefore, satellites may be deployed in the following three manners:
Earth-fixed cell (earth-fixed cell): A same geographical area is continuously covered by using a satellite beam, for example, in a case of a GSO satellite.

Quasi-earth-fixed cell (quasi-earth-fixed cell): A satellite beam direction is continuously adjusted to cover a same geographical area in a limited time period and cover another geographical area in another time period, for example, in a case in which an NGSO satellite generates a controllable beam.

Earth-moving cell (earth-moving cell): A satellite generates a beam in a fixed direction, and a coverage area of the satellite moves along the direction of the beam on a surface of the earth, for example, in a case in which an NGSO satellite generates a fixed or non-steering beam.

Due to high-speed movement of a satellite, a plurality of terminal devices are triggered to simultaneously perform cell handovers. The following briefly describes an existing handover procedure.

### 2. Conditional handover procedure

In a conventional handover procedure, mobility management of a terminal device in a connected state is controlled by a source base station accessed by the terminal device. The source base station sends a handover command to indicate, to the terminal device, a cell to which the terminal device is to be handed over and how to perform the handover. After receiving the handover command sent by the source base station, the terminal device accesses the target cell based on information carried in the handover command. Therefore, successful sending of the handover command is a necessary condition for ensuring a successful handover in a conventional cell handover mechanism.

FIG. 2 is a schematic interaction flowchart of a conventional cell handover. Specific steps are as follows:
201. A source base station sends a radio resource control (radio resource control, RRC) reconfiguration message to a terminal device in a connected state, where the RRC reconfiguration message is used by the terminal device to measure signal strength of a current serving cell and signal strength of another cell, and the RRC reconfiguration message includes a measurement object, a report configuration, a measurement identifier, and other parameters.
202. The terminal device receives the RRC reconfiguration message from the source base station; and after performing cell measurement based on the RRC reconfiguration message, the terminal device generates a measurement report and reports the measurement report to the currently connected source base station, where the measurement report includes the signal strength of the current serving cell and the signal strength of the another cell that are obtained by the terminal device through measurement.
203. The source base station determines, based on the measurement report reported by the terminal device, whether the terminal device needs to perform a cell handover; and if the source base station determines that the terminal device needs to perform a cell handover, the source base station sends a handover request message to a target base station.
204. The target base station receives the handover request message from the source base station, and determines, based on a quantity of terminal devices connected to the target base station and other cases, whether to allow access of the terminal device; and if the target base station allows the access of the terminal device, the target base station sends a handover request acknowledge message to the source base station, where the handover request acknowledge message includes a cell radio network temporary identifier (cell radio network temporary identifier, C-RNTI) allocated to the terminal device, a security-related algorithm of the target base station, and other parameters.
205. The source base station receives the handover request acknowledge message from the target base station, and sends a handover command to the terminal device, where the handover command includes the parameters in the handover request acknowledge message. It is equivalent that the source base station performs transparent transmission. Specifically, the handover command includes related information of a target cell and a related configuration parameter required for accessing the target cell by the terminal device. For example, the handover command includes a PCI of the target cell, frequency information of the target cell (a frequency channel number of the target cell), the C-RNTI allocated by the target cell to the terminal device, a random access channel (random access channel, RACH) resource required for accessing the target cell, and other information.
206. The terminal device receives the handover command from the source base station, and sends random access to the target base station based on the handover command. In an existing handover procedure, the terminal device is disconnected from the source base station, and before successfully accessing the target base station, the terminal device temporarily stops receiving/sending data.
207. If the terminal device successfully accesses the target base station, the terminal device sends a handover complete message to the target base station.

### 3. CHO handover procedure

Currently, a plurality of companies propose supporting an NG-interface-based CHO handover in an NTN network, to avoid a problem that a terminal device cannot perform a CHO handover between base stations because an XN interface cannot be established due to an excessively long distance between the base stations in the NTN network. In the CHO handover, a source base station triggers sending of CHO configuration information to the terminal device, for example, when signal quality of the terminal device is relatively good. The CHO configuration information includes configuration information of one or more candidate cells and conditional handover trigger conditions (execution conditions) corresponding to the candidate cells. Configuration information of a candidate cell includes common access information of the cell and some resources configured on a network side for the terminal device in the candidate cell, for example, a cell global identification (cell global identification, CGI) or a physical cell identifier (physical cell identifier, PCI) of the candidate cell, and configuration information of a physical layer (physical layer, PHY), a media access control (media access control, MAC) layer, a radio link control (radio link control, RLC) layer, a PDCP layer, and other protocol layers configured on the network side for the terminal device in the candidate cell.

After receiving CHO configuration information of a candidate cell, the terminal device determines whether the terminal device meets a conditional handover trigger condition corresponding to the candidate cell. If the terminal device meets the conditional handover trigger condition corresponding to a handover to the candidate cell, the terminal device uses, as a target cell, the candidate cell that meets the CHO trigger condition. Then, the terminal device sends a random access request to the target cell. If random access is successfully completed, the terminal device sends a CHO complete message to a base station (a target base station) to which the target cell belongs, to notify the target base station that a conditional handover is completed.

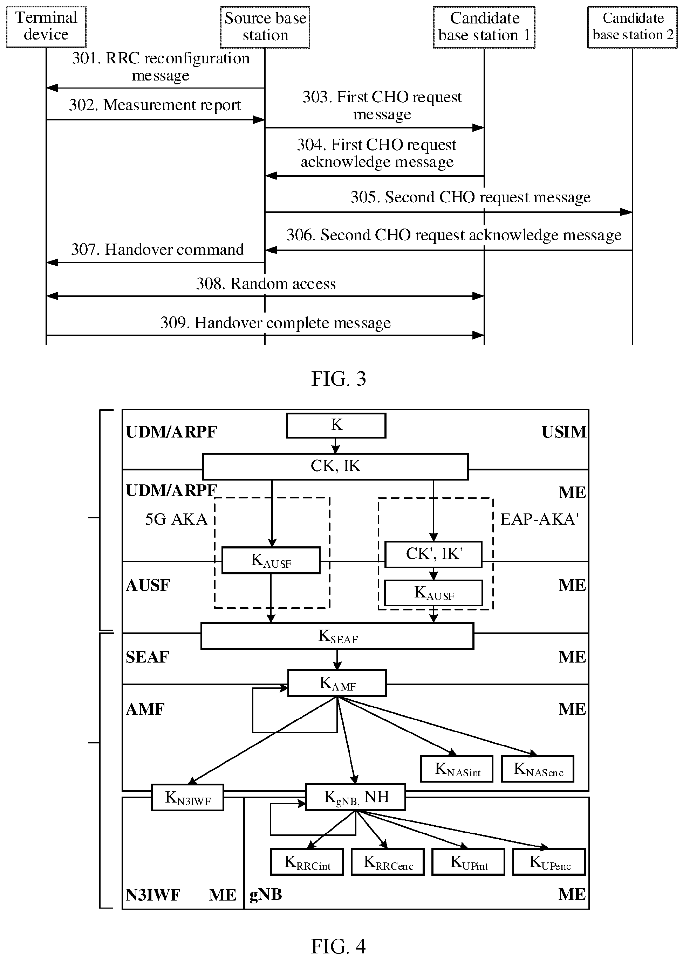

FIG. 3 is a schematic interaction flowchart of critical steps of a conditional handover. Specific steps are as follows: In a protocol release R17, the CHO handover supports only an XN handover, and does not support an NG handover.

301. A source base station sends an RRC reconfiguration message to a terminal device in a connected state, where the RRC reconfiguration message is used by the terminal device to measure signal strength of a current serving cell and signal strength of another cell.

302. The terminal device receives the RRC reconfiguration message from the source base station; and after measuring a plurality of cells based on the RRC reconfiguration message, the terminal device generates a measurement report and reports the measurement report to the currently connected source base station, where the measurement report includes the signal strength of the current serving cell and the signal strength of the another cell that are obtained by the terminal device through measurement.

303. The source base station determines one or more candidate cells. For example, the source base station determines two candidate cells, and the two candidate cells include a candidate cell 1 and a candidate cell 2. The source base station sends a CHO handover request message to each candidate cell. A time sequence of sending messages is not mandatory, and depends on implementations of base stations. The source base station sends a first CHO request message to a candidate base station 1 to which the candidate cell 1 belongs.

304. The candidate base station 1 receives the first CHO request message from the source base station, and returns a first CHO handover request acknowledge message to the source base station, where the first CHO request acknowledge message includes configuration information necessary for the terminal device to access the candidate cell 1. Correspondingly, the source base station receives the first CHO handover request acknowledge message from the candidate base station 1.

305. The source base station sends a second CHO request message to a candidate base station 2 to which the candidate cell 2 belongs. Time at which the source base station sends the first CHO request message may be the same as or different from time at which the source base station sends the second CHO request message. It is possible that the source base station sends the second CHO request message before receiving the first CHO handover request acknowledge message from the candidate base station 1.

306. The candidate base station 2 receives the second CHO request message from the source base station, and sends a second CHO request acknowledge message to the source base station, where the second CHO request acknowledge message includes configuration information necessary for the terminal device to access the candidate cell 2. Correspondingly, the source base station receives the second CHO request acknowledge message from the candidate base station 2.

307. The source base station sends a handover command to the terminal device, where the handover command includes the CHO configuration information of the candidate cell 1, a conditional handover trigger condition corresponding to the candidate cell 1, the configuration information of the candidate cell 2, and a conditional handover trigger condition corresponding to the candidate cell 2.

308. The terminal device receives the handover command from the source base station, and evaluates whether the terminal device meets the conditional handover trigger condition corresponding to the candidate cell 1 and whether the terminal device meets the conditional handover trigger condition corresponding to the candidate cell 2. If the terminal device meets the conditional handover trigger condition corresponding to the candidate cell 1, the terminal device initiates a handover to the candidate base station 1. In this case, the candidate base station 1 is a target base station.

309. The terminal device sends a CHO complete message to the candidate base station 1.

### 4. Key

FIG. 4 is a diagram of an architecture of layered key derivation. Table 1 describes different keys in FIG. 4.

**Table 1**

| Key | Description |
|---|---|
| K | Root key. The root key is stored in a universal subscriber identity module (universal subscriber identity module, USIM) of a subscriber and a unified data management function (unified data management, UDM) of a carrier. The root key is not transmitted in a network or inside a terminal device. A root key of each subscriber is unique and is obtained through calculation based on a subscriber identity. |
| CK, IK | Intermediate keys generated in an authentication procedure. CK is a cipher key (cipher key), and IK is an integrity key (integrity key). CK and IK are generated by the USIM and the UDM by performing an operation based on an authentication nonce and K by using a specific algorithm in an authentication process. Therefore, CK and IK are updated at any time. |
| CK', IK' | Intermediate keys derived in an authentication procedure of an extensible authentication protocol method for 3rd generation authentication and key agreement (extensible authentication protocol method for 3rd generation authentication and key agreement, EAP-AKA'). |
| | Derived by ME and an authentication service function (authentication server function, AUSF) from CK' and IK' in a case of the EAP-AKA'. |
| K_{AUSF} | Derived by the ME and an authentication credential repository and processing function (authentication credential repository and processing function, ARPF) from CK and IK in a case of 5G authentication and key agreement (authentication and key agreement, AKA). |
| K_{SEAF} | K_{SEAF} is an anchor key, is derived by the ME and the AUSF from K_{AUSF}, and is provided by the AUSF for a security anchor function (security anchor function, SEAF) in a serving network. |
| K_{AMF} | Key derived by the ME and the SEAF from K_{SEAF}. |
| K_{NASint} | Integrity protection key of a non-access stratum (non-access stratum, NAS). The key is derived by the ME and an AMF from K_{AMF} and is used to perform integrity protection for NAS signaling. |
| K_{NASenc} | Cipher key of the NAS. The key is derived by the ME and the AMF from K_{AMF} and is used to encrypt the NAS signaling. |
| K_{gNB} | Key of an access stratum. The key is derived by the ME and the AMF from K_{AMF}. |
| NH | Next hop (next hop, NH) key. The key is derived by the ME and the AMF from K_{AMF} and NH used at a previous time and is used for vertical key derivation during a mobile handover. |
| K_{RRCint} | Integrity protection key of RRC signaling. |
| K_{RRCenc} | Cipher key of the RRC signaling. |
| K_{UPint} | Integrity protection key of a user plane. |
| K_{UPenc} | Cipher key of the user plane. |
| K_{N3IWF} | Key derived by the ME and the AMF from K_{AMF} for non-3GPP access. |

### (1) Generation of an initial access key

The terminal device uses a subscription concealed identifier (subscription concealed identifier, SUCI) in a registration request (registration request) in an initial access process. After 5G AKA authentication, the terminal device and the UDM generate K_{AUSF} based on the authentication vectors CK and IK. The terminal device and the AUSF derive the anchor key K_{SEAF} based on K_{AUSF}. The terminal device and the SEAF derive K_{AMF} based on K_{SEAF}. When the EAP-AKA' authentication manner is used, the AUSF receives the authentication vectors CK' and IK' from the ARPF, and the terminal device and the AUSF generate K_{AUSF} based on CK' and IK'.

In a NAS security mode command (security mode command, SMC) phase, the terminal device and the AMF derive the integrity protection key K_{NASint} and the cipher key K_{NASenc} of the NAS based on K_{AMF}. The terminal device and the AMF derive K_{gNB} and NH based on K_{AMF}. In the initial access process of the terminal device, the AMF sends K_{gNB} to a gNodeB, and does not send NH to the gNodeB. In this case, it may be considered that K_{gNB} is associated with virtual NH whose value of an NH chaining count (next hop chaining count, NCC) is equal to 0. After receiving an initial context setup request (initial context setup request) message delivered by the AMF, the gNodeB initializes a value of the NCC to 0.

In an AS SMC phase, the gNodeB derives the cipher key K_{RRCenc} of the RRC signaling and the integrity protection key K_{RRCint} of the RRC signaling. Based on an SMC message received from the gNodeB, the terminal device determines an encryption and integrity protection algorithm, and derives K_{RRCint} and K_{RRCenc}.

The AMF sends a security policy to the gNodeB by using a protocol data unit (protocol data unit, PDU) session request (session request) message. The security policy includes an effective indication of encryption and integrity protection. After a PDU session is established, a user plane security policy is activated. The gNodeB and the terminal device derive the cipher key K_{UPint} and the integrity protection key K_{UPenc} of the user plane based on K_{gNB}.

### (2) Key update during a handover

Each time an initial AS security context needs to be set up between the terminal device and the gNodeB, the AMF and the terminal device derive K_{gNB} and NH. NH is obtained by the terminal device and the AMF through chaining derivation. It may be understood that NH generated at this time is to be used to generate next NH, so that NH can be provided from the AMF to the gNodeB in a forward secrecy manner.

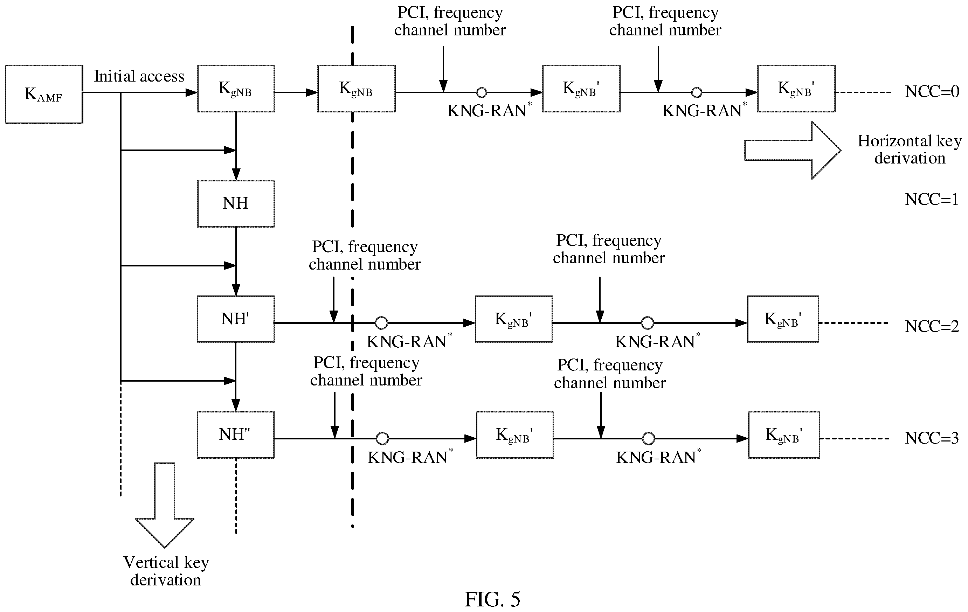

The NCC is maintained by the AMF. The value of the NCC is associated with each K_{gNB} and NH, and is used to count a quantity of key NH chain derivation times, synchronize key chains of the terminal device and the gNodeB, and determine whether next KNG-RAN* is derived from current K_{gNB} or derived from new NH. KNG-RAN* is an intermediate key obtained by the terminal device and a target base station by performing horizontal key derivation or vertical key derivation. After a handover is completed, KNG-RAN* is used as K_{gNB}. KNG-RAN* may be derived from current activated K_{gNB}, or may be derived from NH. If KNG-RAN* is derived from current activated K_{gNB}, this is referred to as horizontal key derivation, and the gNodeB indicates the terminal device not to increase the value of the NCC. Specifically, if KNG-RAN* is determined based on current activated K_{gNB}, a PCI of a target cell, and a frequency channel number of the target cell, the gNodeB indicates the terminal device not to increase the value of the NCC. If KNG-RAN* is derived from NH, specifically, if KNG-RAN* is determined based on K_{AMF} and NH, this is referred to as vertical key derivation, and the gNodeB indicates the terminal device to increase the value of the NCC. FIG. 5 is a diagram of horizontal key derivation and vertical key derivation.

If the gNodeB currently has unused {NH, NCC}, KNG-RAN* is derived from NH. If the gNodeB currently has no unused {NH, NCC}, KNG-RAN* is derived from current activated K_{gNB}. For example, during initial access, because the AMF does not send NH to the gNodeB, KNG-RAN* can be derived only from activated K_{gNB} in a next handover. For another example, a current handover is an intra-gNodeB handover. Due to no change of a core network, the AMF does not deliver new {NH, NCC}, and current remaining {NH, NCC} in the gNodeB is used in this handover. In this case, KNG-RAN* can be derived only from activated K_{gNB} in a next handover.

### 5. Application scenario to which embodiments of this application are applicable

### (1) Application scenario 1: NG handover + unchanged K_{AMF}

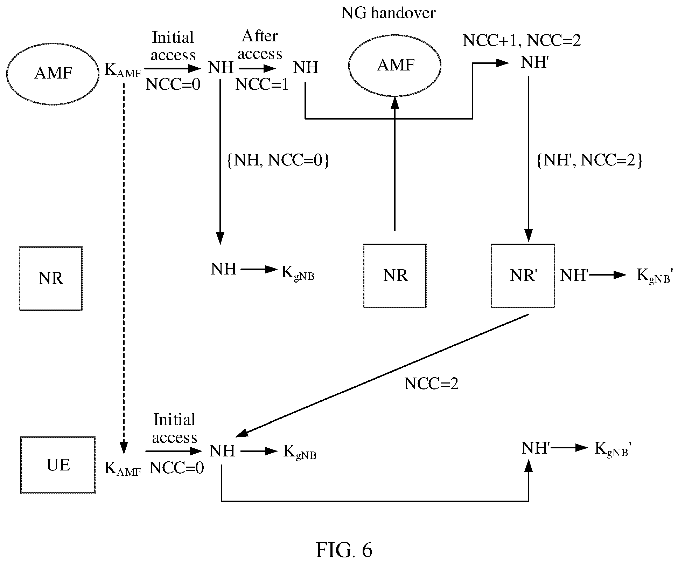

FIG. 6 is a diagram of a key update without a change of K_{AMF} in a conventional NG handover process. When a source AMF receives a handover request (handover required) message, if the source AMF does not change an activated first key K_{AMF}, the source AMF adds 1 to a locally stored NCC, and calculates new NH' based on current first K_{AMF} and NH used at a previous time. It may be understood that the source AMF derives a key in a vertical key derivation manner.

The source AMF sends new {NH', NCC} to a target AMF. The target AMF stores {NH', NCC} and then sends received {NH', NCC} to a target base station by using a handover request message. After the target base station receives {NH', NCC}, the target base station calculates KNG-RAN* by using NH', a PCI of a target cell, and a frequency channel number of the target cell. After a handover succeeds, the target base station uses KNG-RAN* as K_{gNB}' of the target cell.

The target base station delivers, to a terminal device by using a handover command message, a value of the NCC in {NH', NCC} received from the target AMF, and deletes previously stored unused {NH, NCC}.

After receiving the value that is of the NCC and that is delivered by the target base station, if the terminal device determines, through comparison, that the received value of the NCC is inconsistent with a local value of the NCC, the terminal device derives NH for a plurality of times through vertical key derivation. Each time NH is derived through vertical key derivation, NCC+1, until the local value of the NCC is equal to the received value of the NCC, to finally obtain new NH'. Then, the terminal device calculates K_{gNB}' of the target cell by using new NH', the PCI of the target cell, and the frequency channel number of the target cell. In an example scenario, the source AMF and the target AMF may be a same AMF.

Currently, an NG-interface-based CHO handover is proposed in an R18 NTN subject. The CHO handover supports a maximum of eight candidate cells. According to a conventional NG handover procedure, when K_{AMF} remains unchanged, each time a source base station initiates a handover procedure to the AMF, the AMF needs to add 1 to the NCC, and derive NH once in a vertical key derivation manner.

A length of the NCC is 3 bits (bit), and a value range corresponding to the NCC is 0 to 7. After being increased to 7, the NCC may be reversed to NCC=0 for continued use. The value that is of the NCC and that is derived by the AMF is derived by being sequentially increased by 1, and is synchronized with that in the terminal device after the derivation. Therefore, the value of the NCC is gradually derived from 0, 1, 2, 3, 4, 5, 6, 7, and 0, and is derived to 0 again after being derived to 7.

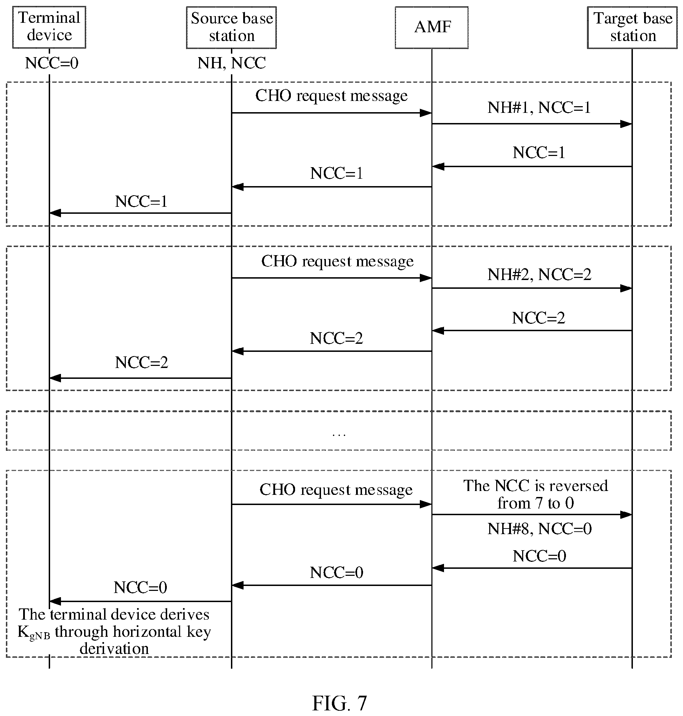

For the CHO handover that supports an NG interface, when there are eight candidate cells, the AMF needs to derive the NCC for eight times. For example, during initial access of the terminal device, NCC=0, and during a next CHO handover, the value of the NCC is derived starting from 1 (actually derived starting from 2). Because there are eight candidate cells, the NCC is derived for eight times, and respective derived values of the NCC are 1, 2, 3, 4, 5, 6, 7, and 0. The target base station delivers the value of the NCC to the terminal device. If the terminal device receives NCC=0, the terminal device considers that the value of the NCC currently does not change, and then derives K_{gNB} in a horizontal key derivation manner. However, the target base station derives NH in a vertical key derivation manner, and determines K_{gNB} based on derived NH and the PCI and the frequency channel number of the cell. Therefore, a key of the terminal device is misaligned with keys of the target base station and the AMF. Consequently, the terminal device cannot communicate with the target base station and the AMF. FIG. 7 is a schematic interaction flowchart of a key update in an NG-interface-based CHO handover process.

### (2) Application scenario 2: NG handover + activated new K_{AMF}

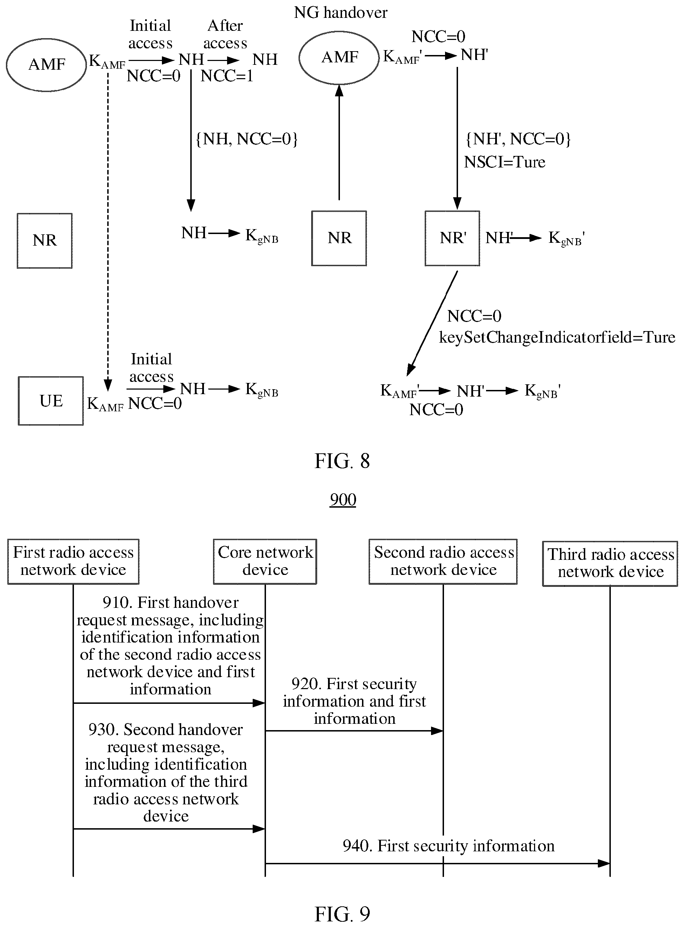

FIG. 8 is a diagram of a key update with activation of new K_{AMF} in a conventional NG handover process. When a source AMF receives an NGAP handover required message, if the source AMF has activated new K_{AMF} (second K_{AMF}), but a context of a terminal device has not changed, the source AMF derives new K_{gNB} by using second K_{AMF}, and NCC=0. The source AMF sends {NH'=new K_{gNB}, NCC=0} to a target AMF. The target AMF stores {NH'=new K_{gNB}, NCC}. The target AMF sends {NH'=new K_{gNB}, NCC=0} and new security context indicator (new security context indicator, NSCI) information to a target base station. After the target base station receives {NH'=new K_{gNB}, NCC=0}, the target base station calculates KNG-RAN* by using NH, a PCI of a target cell, and a frequency channel number of the target cell. After a handover succeeds, the target base station uses KNG-RAN* as K_{gNB}' of the target cell.

The target base station delivers, to the terminal device by using a handover command message, NCC=0 in {NH'=new K_{gNB}, NCC=0} received from the target AMF, and keySetChangeIndicatorfield carried in the handover command message indicates "True". keySetChangeIndicatorfield indicates, to the terminal device, that the source AMF has activated new K_{AMF}.

After receiving the handover command message delivered by the target base station, the terminal device calculates new K_{AMF} and NH' based on the indication of keySetChangeIndicatorfield, and calculates K_{gNB}' of the target cell based on calculated NH', the PCI of the target cell, and the frequency channel number of the target cell.

When the source AMF receives the CHO handover request message, if the source AMF has activated new K_{AMF} (second K_{AMF}), but the context of the terminal device has not changed, if a key of the terminal device is synchronized with a key of the AMF in a CHO handover procedure, after a source base station delivers the CHO handover command message to the terminal device, if the terminal device does not meet a CHO handover trigger condition, the terminal device does not perform a CHO handover; and if the terminal device does not complete a CHO handover, the new key that is of the target cell and that is determined by the terminal device based on the CHO handover command message cannot take effect. Therefore, the key of the terminal device cannot be synchronized with the key of the AMF. Consequently, the key of the terminal device is misaligned with the key of the AMF.

### (3) Application scenario 3: NG handover + horizontally derived new K_{AMF}

In a conditional NG handover process, when a source AMF receives an NGAP handover required message, if the source AMF needs to derive new K_{AMF}, the source AMF horizontally derives new K_{AMF} (third KAMF) based on current K_{AMF}. The source AMF derives new K_{gNB} based on third K_{AMF}, and NCC=0. The source AMF sends, to a target AMF, {NH'=new K_{gNB}, NCC=0}, a key set identifier in 5G (key set identifier in 5G, ngKSI) of third K_{AMF}, and indication information indicating that new K_{AMF} is horizontally derived. The ngKSI of third K_{AMF} and an ngKSI of current K_{AMF} have a same value and a same type. The indication information indicating that new K_{AMF} is horizontally derived is keyAmfHDerivationInd.

After receiving{NH'=new K_{gNB}, NCC=0}, the ngKSI of third K_{AMF}, and the indication information indicating that new K_{AMF} is horizontally derived, the target AMF sets K_AMF_change_flag in an NASC to 1. The target AMF sends a handover message to a target base station, where the handover message carries an NSCI, the NASC, {NH'=new K_{gNB}, NCC=0}.

The target base station sends a handover command message to a terminal device. The handover command carries the NASC, and keySetChangeIndicatorfield carried in the handover command message indicates "True". The NASC indicates that the AMF has horizontally derived K_{AMF}, but cannot indicate a quantity of times the AMF has horizontally derived K_{AMF}.

After receiving the handover command message delivered by the target base station, the terminal device first horizontally derives new K_{AMF}, then continues to derive NH' based on new K_{AMF}, and finally derives K_{gNB}' of the target base station based on NH'.

Currently, a protocol defines a processing principle that a core network device needs to perform horizontal K_{AMF} derivation based on a local policy when receiving a common handover request. In an NG-based CHO procedure, because there are a large quantity of candidate cells, if an AMF performs horizontal K_{AMF} derivation once each time the AMF receives a handover request, but a terminal device cannot know a quantity of K_{AMF} derivation times, a key of the terminal device is misaligned with keys of a target base station and the AMF.

An embodiment of this application provides a cell handover method, applicable to an application scenario in which an NG-interface-based CHO handover is performed, and a core network device does not change K_{AMF}. In this method, a key of a terminal device can be aligned with keys of a target base station and the core network device.

In this embodiment of this application, a plurality of handovers are included in one round of handovers. The one round of handovers is all possible conventional handovers or conditional handovers from a start point at which the terminal device accesses a first access network device or is handed over to the first access network device to an end point at which the terminal device successfully performs a next handover. Key information in a 5G system is used as an example of key information in this embodiment of this application. However, this is not limited.

An embodiment of this application provides a cell handover method, applicable to an enhanced handover. In a first implementation, the enhanced handover may be a procedure in which there may be a plurality of parallel handover preparation processes between an access network device and a core network device for a same terminal device. Specifically, a source access network device may send a plurality of handover request messages to a core network for a same terminal device, to request resources of a plurality of candidate target cells. Then, the core network sends handover requests to target access network devices corresponding to the candidate target cells, to request the target access network devices to allocate resources to the terminal device in the corresponding candidate target cells. Then, the target access network devices feed back handover resources to the source access network device through the core network. After receiving, from the core network, the handover resources prepared by the plurality of candidate target cells, the source access network device may store the handover resources or handover commands of the plurality of candidate target cells, and after determining a candidate cell as a target cell, the source access network device delivers a stored handover resource or handover command corresponding to the target cell to the terminal device. It may be understood that the source access network device may delay sending the handover resource or the handover command of the target cell to the terminal device. In a second implementation, the enhanced handover may alternatively be a procedure in which there is only one handover preparation process between an access network device and a core network device for a same terminal device. Specifically, a source access network device may send one handover request message to a core network for a same terminal device, to request a resource of one target cell. Then, the core network sends a handover request to a target access network device corresponding to the target cell, to request the target access network device to allocate a resource to the terminal device in the corresponding target cell. Then, the target access network device feeds back a handover resource to the source access network device through the core network. After receiving, from the core network, the handover resource prepared by the target cell, the source access network device may store the handover resource or a handover command of the target cell, until the source access network device determines that the handover resource or the handover command needs to be sent to the terminal device. It may be understood that the source access network device may delay sending the handover resource or the handover command of the target cell to the terminal device. Optionally, in the foregoing implementations, the source access network device may allocate a time point or a time period to each (candidate) target cell, and the source access network device sends, in a handover preparation process, the time point or the time period corresponding to each (candidate) target cell to a target access network device corresponding to each (candidate) target cell. The target access network device allocates a handover resource corresponding to each (candidate) target cell to the terminal device at the time point or in the time period. Optionally, in a scenario in which the target access network device allocates the handover resource corresponding to each (candidate) target cell to the terminal device in the time period, when the target access network device determines that the terminal device does not access the target cell corresponding to the target access network device in a time period after the time period, the target access network device may release the resource allocated to the terminal device. Optionally, in the foregoing implementations, after the terminal device receives the handover resource or the handover command that is of the target cell and that is sent by the source access network device, the terminal device accesses the target cell.

In the enhanced handover, because an interaction procedure between the source access network device and the core network device and an interaction procedure between the core network device and the target access network device are prepared in advance, after determining to hand over the terminal device, the source access network device may deliver the handover command in time, thereby reducing time required for a handover procedure. It may be understood that the foregoing enhanced handover may also be replaced with another name. For example, in the foregoing second implementation, the enhanced handover may also be referred to as a time-based handover. It should be noted that the foregoing enhanced handover may also be applied to a scenario in which a handover preparation process is directly performed between a source access network device and a target access network device, in other words, the handover preparation process does not need to be performed through a core network.

The technical solutions provided in this application are applicable to various handovers, including the foregoing CHO, enhanced handover, common handover, and the like. For example, a CHO described in the following embodiments may be replaced with an enhanced handover or a common handover. Details are not described in the following again.

FIG. 9 is a schematic interaction flowchart of a cell handover method 900 according to an embodiment of this application. In this embodiment of this application, a core network device may be an AMF or another device having an access and mobility management function, or may be another core network device; and a first access network device is a source base station, and a second access network device and a third access network device are respectively target base stations corresponding to different handover request messages.

910. The first access network device sends a first handover request message to the core network device, where the first handover request message includes identification information of the second access network device and first information, and the first information indicates that a type of a handover of a terminal device to the second access network device is a conditional handover or an enhanced handover. Correspondingly, the core network device receives the first handover request message from the first access network device.

When the first information indicates a conditional handover, the first information sent by the access network device may be conditional handover request information, for example, a direct conditional handover request; the first information may be a conditional handover request type, for example, an initial CHO request or a CHO replacement request; or the first information may be identification information, for example, a target cell identifier. When the identification information is carried, it indicates a conditional handover. When the identification information is not carried, it indicates a conventional handover. When a handover type is a conventional handover, the first information is not carried. A specific form of the first information is not limited.

When the first information indicates an enhanced handover, the first information sent by the access network device may be indication information. The indication information indicates that this handover is an enhanced handover, and a specific form is not limited. For example, the first information may be a target cell identifier, or may be a handover type identifier. Alternatively, the first information may be information indicating time, and may indicate that the terminal device may perform access within the time. For example, the first information may include information about a time point or information about duration, or may include information about one or more time points. A target access network device prepares a resource based on the first information. The prepared resource is used by the terminal device to perform the handover.

Optionally, the first handover request message further includes a first identifier, and the first identifier is used to identify the first handover request message. For example, the first identifier may be an identifier of a second cell served by the second access network device, and the first handover request message is used to request to connect the terminal device to the second cell served by the second access network device.

The first identifier in the handover request message may be used to distinguish between a plurality of conditional handover request messages sent by the first access network device to the core network device for a same target base station. When the core network device cannot uniquely identify a conditional handover by using a target base station identifier and/or a terminal-device-related identifier (for example, an identifier of the terminal device in the core network device) in a handover request message, in other words, the core network device may receive a plurality of CHO request messages with a same target base station identifier and/or a same terminal-device-related identifier, the core network device cannot distinguish between the plurality of CHO request messages. In this scenario, a handover request message may be identified by using the target base station identifier and/or the terminal-device-related identifier, and the first identifier, or a handover request message may be uniquely identified by using only the first identifier. The first identification information may be a cell identifier of a target cell, or may be other identification information. For example, the other identification information may be represented by a sequence number (1, 2, 3, 4, 5...). In an implementation, the conditional handover request message may be replaced with a handover request message corresponding to another handover type, for example, a handover request message corresponding to the foregoing enhanced handover.

It may be understood that the first information may be the same as the first identifier. For example, the first information is the first identifier, and the first identifier is the first information. The first information or the first identifier can be used to distinguish between an NG-interface-based conditional handover and a conventional handover, and can also be used by a core network to distinguish between a plurality of pieces of conditional handover request information for different target cells of a same target station of a same terminal device from a same source base station. Alternatively, the first information may be different from the first identifier.

920. The core network device sends first security information and the first information to the second access network device. Correspondingly, the second access network device receives the first security information and the first information from the core network device. The first security information includes first key information.

Optionally, the core network device sends the first security information, the first information, and the first identifier to the second access network device.

For example, the first key information includes a first key NH and a first value of an NCC, the first key NH is determined by the core network device based on a first key K_{AMF} and a key NH in a currently stored security context of the terminal device, and the first value is obtained by the core network device by adding 1 to a value of the NCC in the currently stored security context of the terminal device. The first key NH is determined by the core network device in a vertical key derivation manner based on the first key K_{AMF} and the key NH in the security context of the terminal device. It may be understood that the currently stored security context of the terminal device is the key K_{AMF}, the key NH, and the value of the NCC that are currently used by the terminal device and the core network device. The generated first security information is security information used after the terminal device is handed over to the second access network device.

For example, the second access network device sends the first value of the NCC and first configuration information to the terminal device. The first configuration information includes information required for a handover to the target cell, such as a PCI of the second cell, a frequency channel number of the second cell, a C-RNTI allocated by the second cell to the terminal device, and a RACH resource required for accessing the second cell.

Specifically, the second access network device sends the first value of the NCC and the first configuration information to the terminal device through the core network device and the first access network device. It may be understood that, the core network device sends the first value of the NCC and the first configuration information from the second access network device to the first access network device in a transparent transmission manner, and the first access network device transparently forwards the first value of the NCC and the first configuration information from the second access network device to the terminal device.

The core network device stores a context related to a conditional handover request. The core network device may use terminal-device-related identification information, the identification information of the second access network device, the first information, and the first identifier as an identifier or a storage index, to be associated with the currently stored context of the conditional handover request for the terminal device. In a subsequent procedure, the identifier or the storage index can assist the core network device in querying whether a key has been derived for the terminal device. In an implementation, the conditional handover request may be replaced with a handover request corresponding to another handover type, for example, a handover request corresponding to the foregoing enhanced handover. When a handover type is an enhanced handover, the first access network device stores a handover command or a handover resource that is of a corresponding cell and that is sent by the second access network device to the first access network device through the core network device, and delays delivering the handover command or the handover resource to the terminal device. For example, the handover command or the handover resource is the first value of the NCC and the first configuration information. After making a handover decision, the first access network device delivers the handover command of the corresponding cell to the terminal device. It may be understood that a conditional handover request that appears in the following may also be replaced with a handover request corresponding to an enhanced handover, and details are not described.

930. The first access network device sends a second handover request message to the core network device, where the second handover request message includes identification information of the third access network device. Correspondingly, the core network device receives the second handover request message from the first access network device.

A handover type of a second handover request may be a conventional handover, or may be a conditional handover.

Optionally, the second handover request message further includes a second identifier, and the second identifier is used to identify the second handover request message. For example, the second identifier may be an identifier of a third cell served by the third access network device, and the second handover request message is used to request to connect the terminal device to the third cell served by the third access network device.

A function of the second identifier is the same as the function of the first identifier, and details are not described herein.

940. If the identification information of the third access network device is the same as the identification information of the second access network device, the core network device sends the first security information to the third access network device. Correspondingly, the third access network device receives the first security information from the core network device. It may be understood that, when the third access network device and the second access network device are a same access network device, the core network device does not generate new security information/key information. The core network device generates new security information/key information for a same access network device only once in a same round of handovers of the terminal, in other words, a same access network device may use same security information.

The core network device may obtain the identification information of the second radio access network and the first security information based on the context that is of the terminal device and that is stored in step 920. The core network performs determining by using the base station identification information. Alternatively, the core network device may determine, by using both the terminal device identification information (for example, identification information of the terminal device in the core network device) and the base station identification information, whether the third access network device has a same identifier as the second access network device.

If the core network device has derived security information/key information for an access network device, the core network device uses the derived security information, and no longer generates new security information/key information; or if the core network device has not derived security information for an access network device, the core network device generates new security information/key information. Therefore, a quantity of times the core network device derives security information can be reduced, and a value of the NCC can be prevented from being reversed to start from 0 because a quantity of times the core network device receives a handover request message increases, thereby preventing a key determined by the terminal device from being misaligned with keys of the core network device and the third access network device.

For example, if the identification information of the third access network device is the same as the identification information of the second access network device, the core network device sends the first security information and the second identifier to the third access network device.

In another description, in one round of handover procedures of the terminal device, when the core network device receives a handover request message, if the core network device determines that security information/a key has been derived for a target base station, and the terminal device has not been successfully handed over by using the new security information/key after the security information/key is derived, the core network device does not derive a new key, and sends the derived security information/key to the target base station; or if the core network device determines that no security information/key has been derived for a target base station, the core network device derives new security information/a new key and sends the new security information/key to the target base station.

If the identification information of the third access network device is different from the identification information of the second access network device, there may be the following two implementations in which the core network device performs sending to the third wireless network device:
In a first implementation, if the identification information of the third access network device is different from the identification information of the second access network device, the core network device may send second security information to the third access network device. Correspondingly, the third access network device receives the second security information from the core network device. The second security information includes second key information, and the second security information is different from the first security information. It may be understood that, when the third access network device and the second access network device are different access network devices, the core network device needs to generate new security information/key information, and different access network devices use different security information.

For example, if the identification information of the third access network device is different from the identification information of the second access network device, the core network device sends the second security information and the second identifier to the third access network device.

For example, the second key information includes a second key NH and a second value of the NCC, the second key NH is determined by the core network device based on the first key K_{AMF} and the first key NH in a vertical key derivation manner, and the second value is equal to the first value plus 1.

In this implementation, if the core network device has derived security information/key information for a same access network device, the core network device does not generate new security information/key information; or if the core network device has not derived security information for an access network device, the core network device generates new security information/key information. Therefore, a quantity of times the core network device derives security information can be reduced, thereby preventing a key of the terminal device from being misaligned with keys of the core network device and the third access network device because a value of the NCC is reversed to 0.

In a second implementation, if the identification information of the third access network device is different from the identification information of the second access network device, the core network device may send the first security information to the third access network device. It may be understood that, when the third access network device and the second access network device are different access network devices, the core network device does not generate new security information/key information, and the core network device uses the security information/key generated for the second access network device, in other words, the core network device derives same security information for different access network devices in one round of handover procedures.

For example, if the identification information of the third access network device is different from the identification information of the second access network device, the core network device sends the first security information and the second identifier to the third access network device.

In the second implementation, the core network device generates same security information for different access network devices (target base stations) of a same terminal device, so that a quantity of times the core network device derives security information can be reduced, and a value of the NCC can be prevented from being reversed to start from 0 because a quantity of times the core network device receives a handover request message increases, thereby preventing a key determined by the terminal device from being misaligned with keys of the core network device and the third access network device, and reducing key derivation complexity of the core network device.

Optionally, the second handover request message further includes second information, and the second information indicates that a type of a handover of the terminal device to the third access network device is a conditional handover or an enhanced handover. It may be understood that, when the second handover request message includes the second information, the second handover request message is used to request to perform a CHO handover or an enhanced handover; or when the second handover request message does not include the second information, the second handover request message is used to request to perform a conventional common handover. For detailed descriptions of the second information, refer to those of the first information in step 910. The descriptions are similar, and details are not described.

In the second implementation, if the core network device sends the first security information to the third access network device, because the core network device also sends the first security information to the second access network device, after the terminal device successfully accesses the third access network device or the second access network device, a key update (AS key refresh/AS key rekeying) procedure may be performed, to implement key isolation between the second access network device and the third access network device. Specifically, for example, the terminal device is handed over to the third radio access network device. The core network device may generate new key information and send the new key information to the third access network device, or the third access network device may actively trigger a key update procedure. This is not specifically limited in this embodiment of this application.

If the core network device sends the second security information to the third access network device, because the security information sent by the core network device to the second access network device is different from the security information sent by the core network device to the third access network device, after successfully accessing the third access network device, the terminal device does not need to update key information of the third cell served by the third access network device.

In this embodiment, the core network device may be one core network device, or may be two core network devices, to be specific, the source base station is connected to a source AMF, and the target station is connected to a target AMF. When the core network device is two core network devices, a source core network sends key-related information, handover-related information, and the like to a target core network, and then the target core network sends the key-related information, the handover-related information, and the like to the second access network device or the third access network device. This embodiment mainly focuses on a security information derivation policy of the AMF, without a change of a policy of an interaction between the source AMF and the target AMF, because a quantity of AMFs is not limited in this embodiment.

The following describes the cell handover method in this embodiment of this application with reference to specific examples. In the following specific examples, a base station 1 is a source base station, an AMF is a core network device, and a base station 2 and a base station 3 are different target base stations.

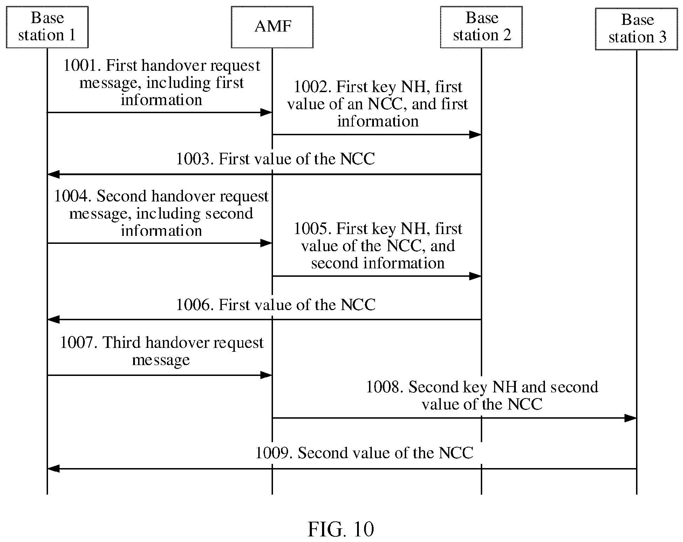

FIG. 10 is a schematic interaction flowchart of an example of a cell handover method according to an embodiment of this application. In this example, in a same round of handovers, a source base station initiates a handover request to an AMF. When the AMF receives the 1^{st} CHO request message sent by the source base station to a target station, the source base station derives security information/a key for the target station. When the AMF receives a new request message sent by the source base station to the target base station, if the AMF determines that key information has been derived for the target base station, the AMF uses the derived key information; or if the AMF determines that no key information has been derived for the target base station, the AMF derives a key for the target base station. In this embodiment, for example, a core network generates an NCC and NH in a 5G system. When derivation is required, 1 is added to a locally stored value of the NCC, and new key information is derived for the target base station based on K_{AMF}. A specific process is as follows:
1001. A base station 1 determines to configure a CHO for a terminal device, where a candidate target cell is a second cell served by a base station 2; and the base station 1 sends a first handover request message to an AMF, where the first handover request message includes identification information of the base station 2, first information, and a first identifier, the first information indicates that a type of a handover of the terminal device to the second cell served by the base station 2 is a conditional handover, the first identifier may be an identifier of the second cell or another identifier, and the first information may be the same as or may be different from the first identifier. Details are not described in the following again. The terminal device currently accesses a first cell served by the base station 1.
1002. The AMF receives the first handover request message from the base station 1. Because the AMF does not change an activated first key K_{AMF}, the AMF derives first key information for the base station 2 based on first K_{AMF}. Specifically, the AMF adds 1 to a stored value of an NCC, to obtain a first value of the NCC, and the AMF obtains a first key NH through calculation based on at least one of the following: current first K_{AMF} and a key NH currently stored in a context of the terminal. The AMF sends the first key information, the first information, and the first identifier to the base station 2, where the first key information includes the first key NH and the first value of the NCC.
1003. The base station 2 receives the first key information, the first information, and identification information of the second cell from the AMF. The base station 2 determines an access stratum key K_{gNB} of the second cell based on the first key NH in the first key information, a PCI of the second cell, and a frequency channel number of the second cell.

The base station 2 sends the first value of the NCC in the first key information and first configuration information to the terminal device through the AMF and the base station 1. The first configuration information includes the PCI of the second cell, the frequency channel number of the second cell, a C-RNTI allocated by the second cell to the terminal device, a RACH resource required for accessing the second cell, and other information.

Correspondingly, the terminal device receives the first value of the NCC and the first configuration information from the base station 2. When the terminal device determines to be handed over to the second cell of the base station 2, if the terminal device first determines, through comparison, that the received first value of the NCC is inconsistent with a local value of the NCC, the terminal device derives the first key NH in a vertical key derivation manner, and then calculates the access stratum key K_{gNB} of the second cell by using the first key NH, the PCI of the second cell, and the frequency channel number of the second cell.

1004. The base station 1 sends a second handover request message to the AMF, where the second handover request message includes the identification information of the base station 2, second information, and a second identifier, and the second information indicates that a type of a handover of the terminal device to a third cell served by the base station 2 is a conditional handover. It should be understood that, if the base station 1 determines to configure another CHO candidate cell for the terminal device, and the candidate cell is the third cell served by the base station 2, the base station 1 sends the second handover request message to the AMF.

1005. The AMF receives the second handover request message from the base station 1, and the AMF determines whether key information has been derived for the base station 2. If the AMF determines that key information has been derived for the base station 2, the AMF sends the first key information, the second information, and identification information of the third cell to the base station 2, where the first key information includes the first key NH and the first value of the NCC.

1006. The base station 2 receives the first key information, the second information, and the identification information of the third cell from the AMF. The base station 2 determines an access stratum key K_{gNB} of the third cell based on the first key NH in the first key information, a PCI of the third cell, and a frequency channel number of the third cell.

The base station 2 sends the first value of the NCC in the first key information and second configuration information to the terminal device through the AMF and the base station 1. The second configuration information includes the PCI of the third cell, the frequency channel number of the third cell, a C-RNTI allocated by the third cell to the terminal device, a RACH resource required for accessing the third cell, and other information.

Correspondingly, the terminal device receives the first value of the NCC and the second configuration information from the base station 2. When the terminal device determines to be handed over to the third cell, if the terminal device first determines, through comparison, that the received first value of the NCC is consistent with a local value of the NCC, the terminal device calculates the access stratum key K_{gNB} of the third cell by using the first key NH corresponding to the first value of the NCC, the PCI of the third cell, and the frequency channel number of the third cell.

1007. The base station 1 sends a third handover request message to the AMF, where the third handover request message includes identification information of a base station 3 and identification information of a fourth cell served by the base station 3. Optionally, the third handover request message may further include third information, and the third information indicates that a type of a handover of the terminal device to the fourth cell served by the base station 3 is a conditional handover.

1008. The AMF receives the third handover request message from the base station 1. Because the base station 2 and the base station 3 are different base stations, if the AMF determines that no key information has been derived for the base station 3, the AMF derives second key information for the base station 3 based on first K_{AMF}. Specifically, the AMF adds 1 to the first value of the NCC, to obtain a second value of the NCC, and the AMF obtains a second key NH through calculation based on current first K_{AMF} and the first key NH. The AMF sends the second key information and the identification information of the fourth cell to the base station 3, where the second key information includes the second key NH and the second value of the NCC.

1009. The base station 3 receives the second key information and the identification information of the fourth cell from the AMF. The base station 3 determines an access stratum key K_{gNB} of the fourth cell based on the second key NH in the second key information, a PCI of the fourth cell, and a frequency channel number of the fourth cell.

The base station 3 sends the second value of the NCC in the second key information and third configuration information to the terminal device through the AMF and the base station 1. The third configuration information includes the PCI of the fourth cell, the frequency channel number of the fourth cell, a C-RNTI allocated by the fourth cell to the terminal device, a RACH resource required for accessing the fourth cell, and other information.

Correspondingly, the terminal device receives the second value of the NCC and the third configuration information from the base station 3. If the terminal device determines, through comparison, that the received second value of the NCC is inconsistent with a local value of the NCC, the terminal device derives the second key NH in a vertical key derivation manner, and then calculates the access stratum key K_{gNB} of the fourth cell by using the second key NH, the PCI of the fourth cell, and the frequency channel number of the fourth cell.

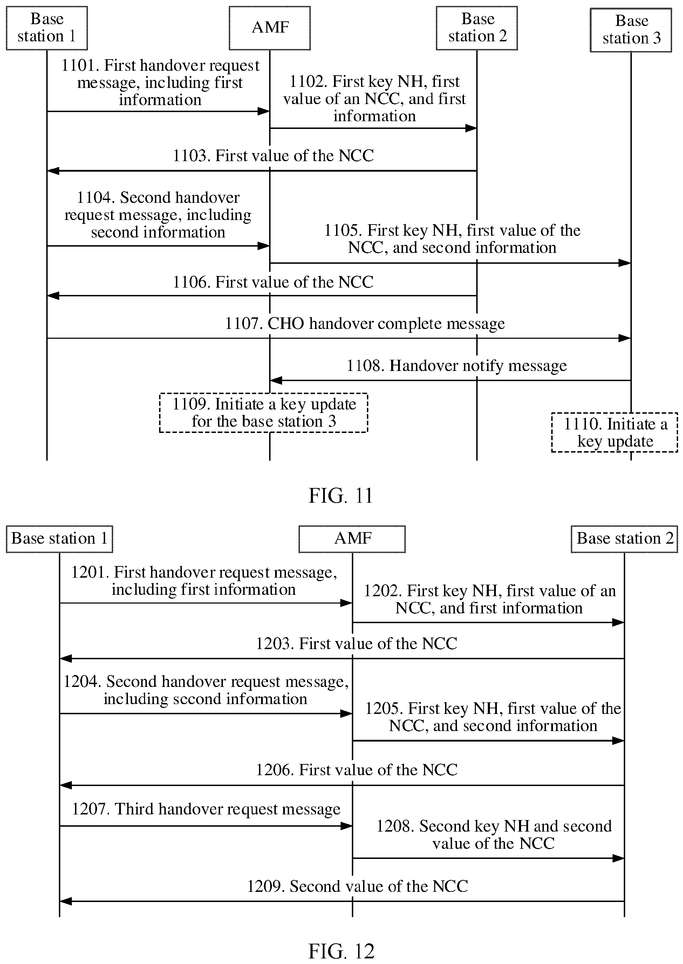

FIG. 11 is a schematic interaction flowchart of another example of a cell handover method according to an embodiment of this application. Specific steps are as follows: In this example, in a same round of CHOs, a source base station initiates a handover request to an AMF. For a same terminal device, the AMF derives same key information for all target base stations of the terminal device. After the terminal device is successfully handed over, the AMF or a base station may initiate a key update procedure to implement key isolation between different target base stations. A specific process is as follows:
1101. A base station 1 determines, based on measurement report information reported by a terminal device, to hand over the terminal device to a base station 2 through a CHO, and the base station 1 sends a first handover request message to an AMF, where the first handover request message includes identification information of the base station 2, first information, and identification information of a second cell served by the base station 2, and the first information indicates that a type of a handover of the terminal device to the second cell served by the base station 2 is a conditional handover. The terminal device currently accesses a first cell served by the base station 1.
1102. The AMF receives the first handover request message from the base station 1. Because the AMF does not change an activated first key K_{AMF}, the AMF derives first key information for the base station 2 based on first K_{AMF}. Specifically, the AMF adds 1 to a stored value of an NCC, to obtain a first value of the NCC, and the AMF obtains a first key NH through calculation based on current first K_{AMF} and a key NH used at a previous time. The AMF sends the first key information, the first information, and the identification information of the second cell to the base station 2, where the first key information includes the first key NH and the first value of the NCC.
1103. The base station 2 receives the first key information, the first information, and the identification information of the second cell from the AMF. The base station 2 determines an access stratum key K_{gNB} of the second cell based on the first key NH in the first key information, a PCI of the second cell, and a frequency channel number of the second cell.

The base station 2 sends the first value of the NCC in the first key information and first configuration information to the terminal device through the AMF and the base station 1. The first configuration information includes the PCI of the second cell, the frequency channel number of the second cell, a C-RNTI allocated by the second cell to the terminal device, a RACH resource required for accessing the second cell, and other information.

Correspondingly, the terminal device receives the first value of the NCC and the first configuration information from the base station 2. If the terminal device determines, through comparison, that the received first value of the NCC is inconsistent with a local value of the NCC, the terminal device derives the first key NH in a vertical key derivation manner, and then calculates the access stratum key K_{gNB} of the second cell by using the first key NH, the PCI of the second cell, and the frequency channel number of the second cell.

1104. The base station 1 sends a second handover request message to the AMF, where the second handover request message includes identification information of a base station 3, second information, and identification information of a third cell served by the base station 3, and the second information indicates that a type of a handover of the terminal device to the third cell is a conditional handover.

1105. The AMF receives the second handover request message from the base station 1. Regardless of whether a target base station of this CHO handover is the base station 2 or the base station 3, the AMF uses derived key information. In this round of CHO handovers, the AMF sends same key information to all target base stations. Because the target base station corresponding to this handover request message is the base station 3, the AMF sends the derived first key information, the second information, and the identification information of the third cell served by the base station 3 to the base station 3, where the first key information includes the first key NH and the first value of the NCC.

1106. The base station 3 receives the first key information, the second information, and the identification information of the third cell served by the base station 3 from the AMF. The base station 3 determines an access stratum key K_{gNB} of the third cell based on the first key NH in the first key information, a PCI of the third cell, and a frequency channel number of the third cell.

The base station 2 sends the first value of the NCC in the first key information and second configuration information to the terminal device through the AMF and the base station 1. The second configuration information includes the PCI of the third cell, the frequency channel number of the third cell, a C-RNTI allocated by the third cell to the terminal device, a RACH resource required for accessing the third cell, and other information.

Correspondingly, the terminal device receives the first value of the NCC and the second configuration information from the base station 3. If the terminal device determines, through comparison, that the received first value of the NCC is consistent with a local value of the NCC, the terminal device calculates the access stratum key K_{gNB} of the third cell by using the first key NH corresponding to the first value of the NCC, the PCI of the third cell, and the frequency channel number of the third cell.

1107. If the terminal device is handed over to the third cell served by the base station 3, the terminal device sends a CHO handover complete message to the base station 3.

1108. After the base station 3 receives the CHO handover complete message sent by the terminal device, the base station 3 sends a handover notify (handover notify) message to the AMF, where the handover notify message indicates that the terminal device has completed the CHO handover to the third cell.

Because the AMF sends a same key to all CHO target base stations, to ensure key security, after the CHO handover is completed, the AMF or a base station may initiate an update of key information of the base station 3.

1109. The AMF initiates an update of the key information of the base station 3.

For example, the AMF may update activated K_{AMF} according to a K_{AMF} update rule or the AMF may horizontally derive new K_{AMF}, and derive a new key K_{gNB} of the third cell based on new K_{AMF}. In this case, a new key NH is the new key K_{gNB}, and a value of the NCC is equal to 0. The AMF sends a context update request message of the terminal device to the base station 3. The context update request message includes the new key NH, NCC=0, and new security context indication information (new security context indicator, NCSI), and the NCSI indicates that K_{AMF} is updated. After receiving the context update request message that is of the terminal device and that is sent by the AMF, the base station 3 triggers an intra-cell handover to implement a key update.

For example, the AMF does not change the activated first key K_{AMF}, adds 1 to the first value of the NCC, to obtain a second value of the NCC, and derives a second key NH in a vertical key derivation manner. Specifically, the second key NH is obtained by the AMF through calculation based on first K_{AMF} and the first key NH. The AMF sends a context update request message of the terminal device to the base station 3. The context update request message includes the second key NH and the second value of the NCC. After receiving the context update request message that is of the terminal device and that is sent by the AMF, the base station 3 triggers an intra-cell handover to implement a key update.

1110. The base station 3 initiates an update of the key information of the base station 3. Specifically, after the base station 3 receives the CHO handover complete message from the terminal device, the base station 3 actively triggers a key update (key refresh) procedure to change keys of the terminal device and the base station 3.

Step 1109 and step 1110 are optional. If step 1109 is performed, step 1110 does not need to be performed. If step 1110 is performed, step 1109 does not need to be performed.

FIG. 12 is a schematic interaction flowchart of another example of a cell handover method according to an embodiment of this application. Specific steps are as follows: In this example, for a same terminal device, a base station 1 initiates a common handover request after initiating a plurality of CHO handover requests to an AMF.

1201. A base station 1 sends a first handover request message to an AMF, where the first handover request message includes identification information of a base station 2, first information, and identification information of a second cell served by the base station 2, and the first information indicates that a type of a handover of a terminal device to the second cell served by the base station 2 is a conditional handover. The first handover request message is used to request to perform a CHO handover. The terminal device currently accesses a first cell served by the base station 1.

1202. The AMF receives the first handover request message from the base station 1. Because the AMF does not change an activated first key K_{AMF}, the AMF derives first key information for the base station 2 based on first K_{AMF}. Specifically, the AMF adds 1 to a stored value of an NCC, to obtain a first value of the NCC, and the AMF obtains a first key NH through calculation based on current first K_{AMF} and a key NH used at a previous time. The AMF sends the first key information, the first information, and the identification information of the second cell to the base station 2, where the first key information includes the first key NH and the first value of the NCC.

1203. The base station 2 receives the first key information, the first information, and the identification information of the second cell from the AMF. The base station 2 sends the first value of the NCC in the first key information and first configuration information to the terminal device through the AMF and the base station 1. The first configuration information includes a PCI of the second cell, a frequency channel number of the second cell, a C-RNTI allocated by the second cell to the terminal device, a RACH resource required for accessing the second cell, and other information.

1204. The base station 1 sends a second handover request message to the AMF, where the second handover request message includes the identification information of the base station 2, second information, and identification information of a third cell served by the base station 2, and the second information indicates that a type of a handover of the terminal device to the third cell served by the base station 2 is a conditional handover. The second handover request message is used to request to perform a CHO handover.

1205. The AMF receives the second handover request message from the base station 1. Because the second handover request message is used to request to perform a CHO handover, and the AMF has derived key information for the base station 2, the third cell of the base station 2 uses the derived first key information, where the first key information includes the first key NH and the first value of the NCC. The AMF sends the first key information, the second information, and the identification information of the third cell to the base station 2.

1206. The base station 2 receives the first key information, the second information, and the identification information of the third cell served by the base station 2 from the AMF. The base station 2 sends the first value of the NCC in the first key information and second configuration information to the terminal device through the AMF and the base station 1. The second configuration information includes a PCI of the third cell, a frequency channel number of the third cell, a C-RNTI allocated by the third cell to the terminal device, a RACH resource required for accessing the third cell, and other information.

1207. The base station 1 sends a third handover request message to the AMF, where the third handover request message includes the identification information of the base station 2 and identification information of a fourth cell served by the base station 2. The third handover request message is used to request to perform a conventional common handover.

1208. The AMF receives the third handover request message from the base station 1. Because the third handover request message is used to request to perform a conventional common handover, the AMF derives, based on first K_{AMF}, second key information for the fourth cell served by the base station 2. Specifically, the AMF adds 1 to the first value of the NCC, to obtain a second value of the NCC, and the AMF obtains a second key NH through calculation based on current first K_{AMF} and the first key NH. The AMF sends the second key information and the identification information of the fourth cell to the base station 2, where the second key information includes the second key NH and the second value of the NCC.

1209. The base station 2 receives the second key information and the identification information of the fourth cell served by the base station 2 from the AMF. The base station 2 sends the second value of the NCC in the second key information and third configuration information to the terminal device through the AMF and the base station 1. The third configuration information includes a PCI of the fourth cell, a frequency channel number of the fourth cell, a C-RNTI allocated by the fourth cell to the terminal device, a RACH resource required for accessing the fourth cell, and other information.

An embodiment of this application provides a cell handover method, applicable to an application scenario in which any one of an NG-interface-based CHO handover, a conventional handover, and other handover types such as the foregoing enhanced handover is performed, and a core network device does not change K_{AMF}. In this method, a key of a terminal device can be aligned with keys of a target base station and an AMF.

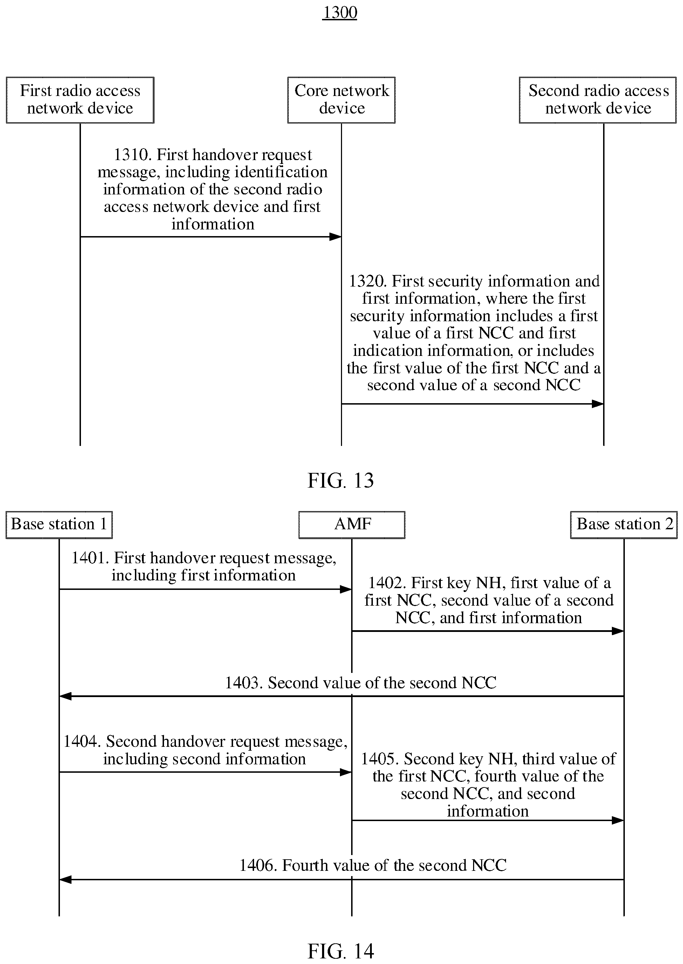

FIG. 13 is a schematic interaction flowchart of a cell handover method 1300 according to an embodiment of this application. In this embodiment of this application, a core network device is an AMF.

1310. A first access network device sends a first handover request message to the core network device, where the first handover request message includes identification information of a second access network device and first information, and the first information indicates that a type of a handover of a terminal device to the second access network device is a conditional handover. Correspondingly, the core network device receives the first handover request message from the first access network device. The first access network device is a source base station, and the second access network device is a target base station.

Optionally, the first handover request message further includes a first identifier, and the first identifier is used to identify the first handover request message. For example, the first identifier may be an identifier of a second cell served by the second access network device, and the first handover request message is used to request to connect the terminal device to the second cell served by the second access network device.

1320. The core network device sends first security information and the first information to the second access network device. Correspondingly, the second access network device receives the first security information and the first information from the core network device.

Optionally, the core network device sends the first security information, the first information, and the first identifier to the second access network device. Correspondingly, the second access network device receives the first security information, the first information, and the first identifier from the core network device.

In a first implementation, the first security information includes a first value of a first NCC and first indication information, and the first indication information is used by the terminal device to determine a key of the second access network device. The first value of the first NCC is obtained by the core network device by adding 1 to a value of the first NCC in a currently stored security context of the terminal device. The first security information further includes a first key NH, and the first key NH is determined by the core network device based on a first key K_{AMF} and a key NH in the currently stored context of the terminal. The first NCC, first K_{AMF}, and first NH in the security context of the terminal device are security information used in a core network and on a terminal side after the terminal device currently accesses the core network, and the to-be-generated first security information is security information used on a target side after the handover. It may be understood that the first key NH is determined by the core network device in a vertical key derivation manner based on the first key K_{AMF} used at a previous time and the key NH used at the previous time.

For example, the first indication information indicates a round of generating the first value of the first NCC. It may be understood that a length of the NCC is 3 bits, and the first indication information may be a value. For example, if the first indication information is 1, it indicates that the NCC is currently in the 1^{st} round, namely, 0 to 7; if the second indication information is 2, it indicates that the NCC is currently in the 2^{nd} round, namely, 8 to 15; and so on.

For example, if the first value is generated at the 1^{st} time, the round indicated by the first indication information is 1. For another example, if the first value is generated at the 2^{nd} time, the round indicated by the first indication information is 2.

The first indication information may be an extended most significant bit of the first NCC. For example, the first indication information includes 2 bits, indicating that the first NCC may be extended by 2 bits. For example, when the first NCC is 110 represented in binary, and the first indication information is 01 represented in binary, in the core network, the first indication information and the first NCC are combined into 01110, and 01110 is converted into a decimal number to obtain a real NCC that is 14. On the terminal side, after the first indication information and the first NCC are received, the same principle is used to use the first indication information as the most significant bit of the first NCC to obtain, through calculation, the real NCC that is 14, and the terminal compares 14 with a locally stored NCC to determine a key derivation manner.

Optionally, the first indication information and the first value of the first NCC may be carried in different fields, and the value of the first NCC occupies 3 bits. The first indication information may be carried in a security context in a handover request (HANDOVER Request) delivered by the core network to the second access network device. The core network and the terminal device calculate the real NCC for the first NCC and the first indication information by using the same principle.

For example, the second access network device sends the first value of the first NCC, the first indication information, and first configuration information to the terminal device. The first configuration information includes a PCI of the second cell, a frequency channel number of the second cell, a C-RNTI allocated by the second cell to the terminal device, a RACH resource required for accessing the second cell, and other information. Specifically, the second access network device sends the first value of the first NCC, the first indication information, and the first configuration information to the terminal device through the core network device and the first access network device.

Correspondingly, the terminal device receives the first value of the first NCC, the first indication information, and the first configuration information from the second access network device. The terminal device may determine the key of the second access network device based on the first value of the first NCC and the first indication information. Specifically, if the terminal device may determine, based on the first value of the first NCC and the first indication information, that a locally stored value of the NCC is different from the value that is of the NCC and that is indicated by the second access network device, the terminal device determines the first key NH based on the first key K_{AMF} and the key NH used at the previous time, and determines K_{gNB} of the second access network device based on the first key NH, the PCI of the second cell, and the frequency channel number of the second cell.

In a second implementation, the first security information includes the first value of the first NCC and a second value of a second NCC, and a maximum value of the second NCC is greater than a maximum value of the first NCC. A quantity of bits occupied by the maximum value of the second NCC is greater than a quantity of bits occupied by the maximum value of the first NCC. It may be understood that the second NCC is added, and the quantity of bits occupied by the maximum value of the second NCC is greater than 3, so that a value of an NCC is indicated by more bits. For example, the maximum value of the second NCC occupies 4 bits, a value range of the second NCC is 0 to 16, and a value range of the first NCC is 0 to 7. When the core network device cannot represent a real NCC by using the first NCC, the core network represents the real NCC by using the second NCC. In this case, a value of the first NCC is not limited, and may be agreed to be a fixed value, or may be any filled value. When both the first NCC and the second NCC are carried, the value of the first NCC is ignored.

The second NCC may be carried in a security context, and further, may be carried in a security context in a handover request sent by the core network device to the second access network device.

For example, the second access network device receives the first NCC and the second NCC that are sent by the core network device. In an optional manner, the second access network device sends only the second NCC to the terminal device, and ignores the first NCC. In another possible manner, the second access network device forwards both the first NCC and the second NCC to the terminal, and the terminal selects the second NCC for use. The second access network device sends the second value of the second NCC and first configuration information to the terminal device. The first configuration information includes a PCI of the second cell, a frequency channel number of the second cell, a C-RNTI allocated by the second cell to the terminal device, a RACH resource required for accessing the second cell, and other information. Specifically, the second access network device sends the second value of the second NCC and the first configuration information to the terminal device through the core network device and the first access network device.

Correspondingly, the terminal device receives the second value of the second NCC and the first configuration information from the second access network device. The terminal device may determine a key of the second access network device based on the second value of the second NCC. Specifically, if the terminal device may determine, based on the second value of the second NCC, that a locally stored value of the NCC is different from the second value of the second NCC, the terminal device determines a first key NH based on a first key K_{AMF} and a key NH used at a previous time, and determines K_{gNB} of the second access network device based on the first key NH, the PCI of the second cell, and the frequency channel number of the second cell.

In the first implementation, each time the core network device receives a handover request message, the core network device derives security information (a key NH and a value of the NCC) once, and sends, to a target base station (the second access network device/a third access network device), the security information and indication information indicating a round of generating the value of the NCC/whether the value of the NCC is reversed. The target base station sends the value of the NCC and the indication information to the terminal device. The terminal device may determine, based on the indication information and the value of the NCC, a key consistent with a key of the target base station. Therefore, a key of the terminal device can be prevented from being misaligned with keys of the core network device and the target base station.

In the second implementation, each time the core network device receives a handover request message, the core network device derives security information (a key NH, a value of the first NCC, and a value of the second NCC) once, and sends the security information to a target base station (the second access network device/a third access network device). The target base station sends the value of the second NCC in the security information to the terminal device. Because the value range of the second NCC is greater than the value range of the first NCC, as a quantity of handover requests increases, a probability that the value of the second NCC is reversed to 0 is lower than a probability that the value of the first NCC is reversed to 0. Therefore, there is a lower probability that a key determined by the terminal device based on the value of the second NCC is inconsistent with a key of the target base station, thereby preventing a key of the terminal device from being misaligned with keys of the core network device and the target base station.

The following describes the cell handover method in this embodiment of this application with reference to a specific example.

FIG. 14 is a schematic interaction flowchart of an example of a cell handover method according to an embodiment of this application. A base station 1 is a source base station, an AMF is a core network device, and a base station 2 is a target base station. In this example, in a same round of CHOs, each time the AMF receives a handover request message sent by the source base station, the AMF derives a new key for the target base station once. A quantity of bits occupied by a maximum value of a first NCC is equal to 3, and a quantity of bits occupied by a maximum value of a second NCC is greater than 3.

1401. A base station 1 sends a first handover request message to an AMF, where the first handover request message includes identification information of a base station 2, first information, and identification information of a second cell served by the base station 2, and the first information indicates that a type of a handover of a terminal device to the second cell served by the base station 2 is a conditional handover. The first handover request message is used to request to perform a CHO handover. The terminal device currently accesses a first cell served by the base station 1.

1402. The AMF receives the first handover request message from the base station 1. Because the AMF does not change an activated first key K_{AMF}, the AMF derives first security information for the base station 2 based on first K_{AMF}, where the first security information includes a first value of a first NCC, a second value of a second NCC, and a first key NH, and a maximum value of the second NCC is greater than a maximum value of the first NCC. Specifically, the AMF adds 1 to a stored value of the first NCC, to obtain the first value of the first NCC, the AMF adds 1 to a stored value of the second NCC, to obtain the second value of the second NCC, and the AMF obtains the first key NH through calculation based on current first K_{AMF} and a key NH used at a previous time.

The AMF sends the first value of the first NCC, the second value of the second NCC, the first key NH, the first information, and the identification information of the second cell to the base station 2.

1403. The base station 2 receives the first value of the first NCC, the second value of the second NCC, the first key NH, the first information, and the identification information of the second cell from the AMF, and the base station 2 ignores the first value of the first NCC. The base station 2 sends the second value of the second NCC and first configuration information to the terminal device through the AMF and the base station 1. The first configuration information includes a PCI of the second cell, a frequency channel number of the second cell, a C-RNTI allocated by the second cell to the terminal device, a RACH resource required for accessing the second cell, and other information.

1404. The base station 1 sends a second handover request message to the AMF, where the second handover request message includes the identification information of the base station 2, second information, and identification information of a third cell served by the base station 2, and the second information indicates that a type of a handover of the terminal device to the third cell served by the base station 2 is a conditional handover. The second handover request message is used to request to perform a CHO handover.

1405. The AMF receives the second handover request message from the base station 1, and the AMF derives second security information for the base station 2 based on first K_{AMF}, where the second security information includes a third value of the first NCC, a fourth value of the second NCC, and a second key NH. Specifically, the AMF adds 1 to the stored first value of the first NCC, to obtain the third value of the first NCC, the AMF adds 1 to the stored second value of the second NCC, to obtain the fourth value of the second NCC, and the AMF obtains the second key NH through calculation based on current first K_{AMF} and the first key NH used at a previous time.

The AMF sends the third value of the first NCC, the fourth value of the second NCC, the second key NH, the first information, and the identification information of the second cell to the base station 2.

1406. The base station 2 receives the third value of the first NCC, the fourth value of the second NCC, the second key NH, the first information, and the identification information of the second cell from the AMF, and the base station 2 ignores the third value of the first NCC. The base station 2 sends the fourth value of the second NCC and second configuration information to the terminal device through the AMF and the base station 1. The second configuration information includes a PCI of the third cell, a frequency channel number of the third cell, a C-RNTI allocated by the third cell to the terminal device, a RACH resource required for accessing the third cell, and other information.

An embodiment of this application provides a cell handover method, applicable to a scenario in which when an AMF receives a CHO handover request message, the AMF has activated new K_{AMF} (second K_{AMF}), but has not synchronized with a base station and a terminal by using a context change procedure of the terminal device. In this method, a key synchronization process of the terminal device, the base station device, and the AMF can be prevented from being not completed because the terminal device does not complete a CHO handover in a CHO procedure, thereby preventing a key of the terminal device from being misaligned with a key of the AMF.

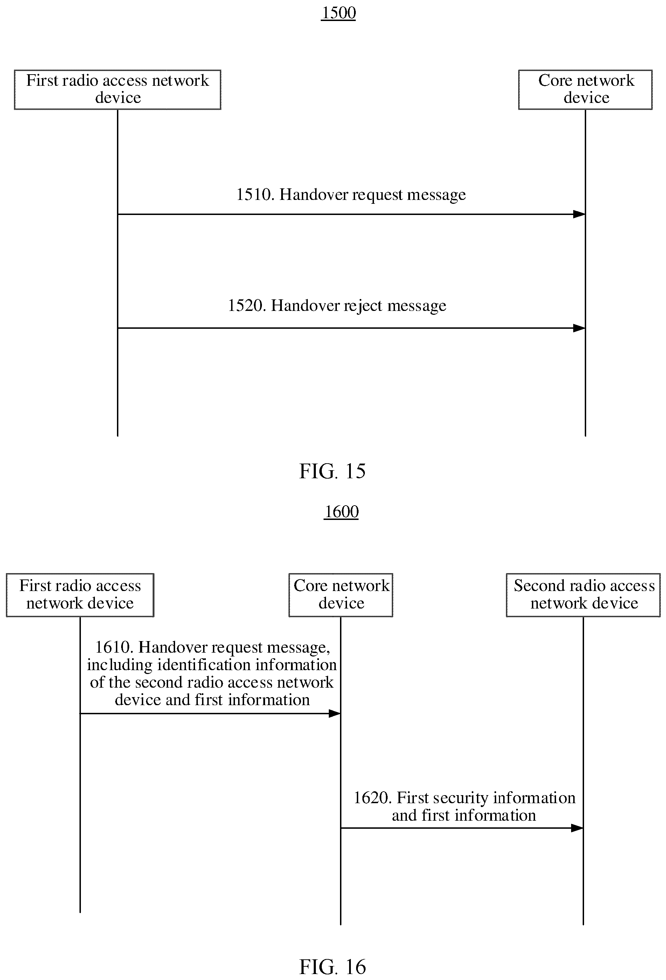

FIG. 15 is a schematic interaction flowchart of a cell handover method 1500 according to an embodiment of this application. In this embodiment of this application, a core network device is an AMF, a first access network device is a source base station, and a second access network device is a target base station.

1510. The first access network device sends a handover request message to the core network device, where the handover request message includes identification information of the second access network device and first information, and the first information indicates that a type of a handover of a terminal device to the second access network device is a conditional handover. The first access network device is an access network device currently accessed by the terminal device. Correspondingly, the core network device receives the handover request message from the first access network device.

1520. If the core network device updates a key K_{AMF}, the core network device sends a handover reject message to the first access network device. Correspondingly, the first access network device receives the handover reject message from the core network device.

It may be understood that, when the core network device receives the handover request message, if the core network device has activated/updated K_{AMF}, but the core network device has not performed key synchronization with the terminal device and the first access network device/a context of the terminal device has not changed, the core network device sends the handover reject message to the first access network device.

Optionally, the handover reject message carries third indication information, and the third indication information indicates that the core network device is to perform a context change procedure of the terminal device or the core network device is to perform key synchronization with the terminal device. The information indicated by the third indication information may be understood as a handover reject cause.

In the technical solution provided in this embodiment of this application, when the core network device receives the CHO request message from the first access network device, if the core network device updates the key K_{AMF}, but the core network device has not performed key synchronization with the terminal device and the first access network device, the core network device sends the handover reject message to the first access network device, to preferentially complete key synchronization between the terminal device and the core network device. After the synchronization is completed, the first radio access device may determine to re-initiate a request of the CHO handover of the terminal device to the second access network device. The first access network device may determine, based on the third indication information, an occasion for reinitiating the CHO handover request. The first access network device may initiate the CHO handover request immediately after waiting for the context change procedure initiated by a core network to end, or may initiate the CHO handover request after waiting for a period of time. A specific implementation is not limited. Therefore, in this solution, a key of the terminal device can be prevented from being synchronized with a key of the core network device in a CHO procedure, thereby preventing the key of the terminal device from being misaligned with the key of the core network device.

Optionally, the core network device sends a context update request message of the terminal device to the first access network device, where the context update request message of the terminal device includes first security information, the first security information is determined by the core network device based on an updated key K_{AMF}, the first security information includes first key information, the first key information may be initial K_{gNB} generated based on updated K_{AMF}, and a corresponding NCC is set to 0. Correspondingly, the first access network device receives the context update request message from the core network device. The updated key K_{AMF} may be referred to as a second key K_{AMF}.

Optionally, after the context of the terminal device is updated, the first access network device sends a handover request message to the core network device. Correspondingly, the core network device receives the handover request message from the first access network device. The handover request message includes the identification information of the second access network device and the first information. The core network device sends second security information and the first information to the second access network device, where the second security information includes second key information.

For example, the second key information includes a first key NH and a first value of the NCC, the first key NH is determined by the core network device based on the updated key K_{AMF} (the second key K_{AMF}) and a key NH used at a previous time, and the first value is obtained by the core network device by adding 1 to a stored value of the NCC. It may be understood that the first key NH is determined by the core network device in a vertical key derivation manner based on the second key K_{AMF} and the key NH used at the previous time.

For example, the second access network device sends the first value of the NCC and first configuration information to the terminal device. The first configuration information includes a PCI of a cell served by the second access network device, a frequency channel number of the cell served by the second access network device, a C-RNTI allocated by the cell served by the second access network device to the terminal device, a RACH resource required for accessing the cell served by the second access network device, and other information.

An embodiment of this application provides a cell handover method, applicable to an application scenario in which when an AMF receives a CHO handover request message, the AMF determines, based on a local policy, whether new K_{AMF} (third K_{AMF}) needs to be horizontally derived. In this method, a key of a terminal device can be prevented from being misaligned with keys of a target base station and a core network device.

FIG. 16 is a schematic interaction flowchart of a cell handover method 1600 according to an embodiment of this application. In this embodiment of this application, a core network device is an AMF, a first access network device is a source base station, and a second access network device is a target base station.

1610. The first access network device sends a handover request message to the core network device, where the handover request message includes identification information of the second access network device and first information, and the first information indicates that a type of a handover of a terminal device to the second access network device is a conditional handover. Correspondingly, the core network device receives the handover request message from the first access network device.

1620. If the core network device determines, based on a policy, to derive a key K_{AMF}, the core network device sends first security information and the first information to the second access network device, where the first security information is determined by the core network device based on a key K_{AMF} used before the derivation, in other words, based on a key K_{AMF} in a current security context of the terminal device. Correspondingly, the second access network device receives the first security information and the first information from the core network device. The first security information includes first key information. The key K_{AMF} used before the derivation may be represented as a first key K_{AMF}, and the derived key K_{AMF} may be represented as a third key K_{AMF}.

For example, the first key information includes a first key NH and a first value of an NCC, the first key NH is determined by the core network device based on the first key K_{AMF} used before the horizontal derivation and a key NH used at a previous time, and the first value is obtained by the core network device by adding 1 to a stored value of the NCC. It may be understood that the first key NH is determined by the core network device in a vertical key derivation manner based on the first key K_{AMF} used before the horizontal derivation and the key NH used at the previous time.

For example, the second access network device sends the first value of the NCC and first configuration information to the terminal device. The first configuration information includes a PCI of a cell served by the second access network device, a frequency channel number of the cell served by the second access network device, a C-RNTI allocated by the cell served by the second access network device to the terminal device, a RACH resource required for accessing the second access network device, and other information.

Specifically, the second access network device sends the first value of the NCC and the first configuration information to the terminal device through the core network device and the first access network device. The terminal device is handed over from the first access network device to the second access network device based on the first value of the NCC and the first configuration information.

Optionally, if the terminal device is successfully handed over to the second access network device, the terminal device sends a CHO handover complete message to the second access network device. After the second access network device receives the CHO handover complete message sent by the terminal device, the second access network device sends a handover notify message to the core network device. The handover notify message indicates that the terminal device has completed the CHO handover to the second access network device.

Optionally, the core network device determines, based on the handover notify message from the second access network device, that the terminal device has completed the CHO handover to the second access network device. If the core network device first horizontally derives third K_{AMF} based on first K_{AMF}, the core network device sends a context update request message of the terminal device to the second access network device. The context update request message of the terminal device includes second security information, and the second security information is determined by the core network device based on the derived key K_{AMF}. The second security information includes second key information.

For example, the second key information includes a second key NH and a second value of the NCC, the second key NH is determined by the core network device based on the horizontally derived third key K_{AMF}, and the second value is equal to 0.

Optionally, after the core network device receives the handover request message, if the core network device determines, based on the first information, not to derive a key K_{AMF}, the core network device sends the first security information and the first information to the second access network device.

In the technical solution provided in this embodiment of this application, when the core network device receives the CHO request message from the first access network device (the source base station), if the core network device determines that the new key K_{AMF} needs to be horizontally derived, the core network device determines the first security information by using the key K_{AMF} used before the derivation, and sends the first security information to the second access network device (the target base station). After the terminal device completes the CHO handover to the second access network device, the core network device horizontally derives the new key K_{AMF}, and determines the second security information based on the new key K_{AMF}. The core network device sends the context update request message of the terminal device to the second access network device, where the context update request message of the terminal device includes the second security information. In this solution, a key of the terminal device can be prevented from being misaligned with keys of the target base station and the core network device because the terminal device does not know a quantity of key K_{AMF} derivation times.

The following describes the cell handover method in this embodiment of this application with reference to a specific example. In the following specific example, a base station 1 is a source base station, a source AMF and a target AMF are a core network device, and a base station 2 is a target base station. The target AMF is an AMF serving the base station 2, and the source AMF is an AMF serving the base station 1. In this embodiment of this application, the source AMF and the target AMF may be a same AMF.

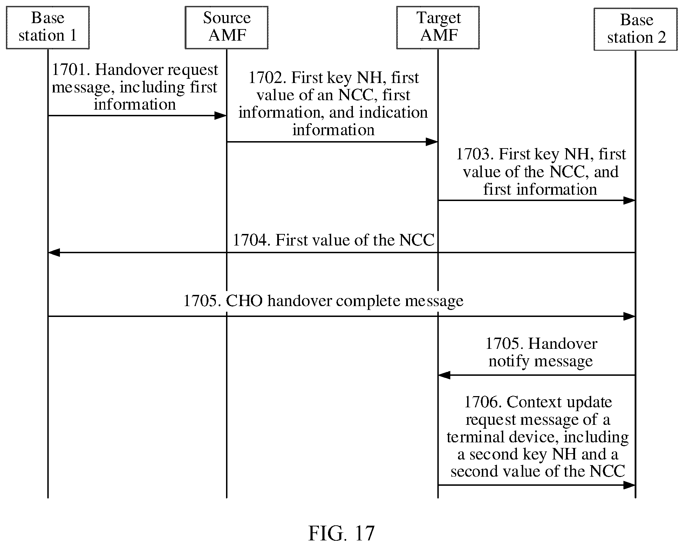

FIG. 17 is a schematic interaction flowchart of an example of a cell handover method according to an embodiment of this application.

1701. A base station 1 sends a handover request message to a source AMF, where the handover request message includes identification information of a base station 2 and first information, and the first information indicates that a type of a handover of a terminal device to the base station 2 is a conditional handover, in other words, the handover request message is used to request to perform a CHO handover. The base station 1 is a base station currently accessed by the terminal device.

1702. After the source AMF receives the handover request message from the base station 1, if the source AMF determines that a new key K_{AMF} needs to be horizontally derived, the source AMF generates a first key NH and a first value of an NCC based on a key K_{AMF} used before the derivation. Specifically, the first key NH is determined by the source AMF based on the key K_{AMF} used before the derivation and a key NH used at a previous time, and the first value is obtained by the source AMF by adding 1 to a stored value of the NCC.

The source AMF sends the first key NH, the first value of the NCC, the first information, and indication information to a target AMF. The indication information indicates the target AMF to horizontally derive the new key K_{AMF}.

1703. The target AMF receives the first key NH, the first value of the NCC, the first information, and the indication information from the source AMF. The target AMF sends the first key NH, the first value of the NCC, and the first information to the base station 2.

1704. The base station 2 sends the first value of the NCC to the terminal device. The terminal device determines an access stratum key of the base station 2 based on the first value of the NCC, and initiates random access to the base station 2.

1705. After the terminal device completes the CHO handover to the base station 2, the terminal device sends a CHO handover complete message to the base station 2. After the base station 2 receives the CHO handover complete message sent by the terminal device, the base station 2 sends a handover notify message to the target AMF. The handover notify message indicates that the terminal device has completed the CHO handover to the base station 2.

1706. After the target AMF receives the handover notify message from the base station 2, the target AMF horizontally derives the new key K_{AMF}, and the target AMF sends a context update request message of the terminal device to the base station 2. The context update request message of the terminal device includes a second key NH and a second value of the NCC, the second key NH is determined by the target AMF based on the new key K_{AMF}, and the second value is equal to 0.

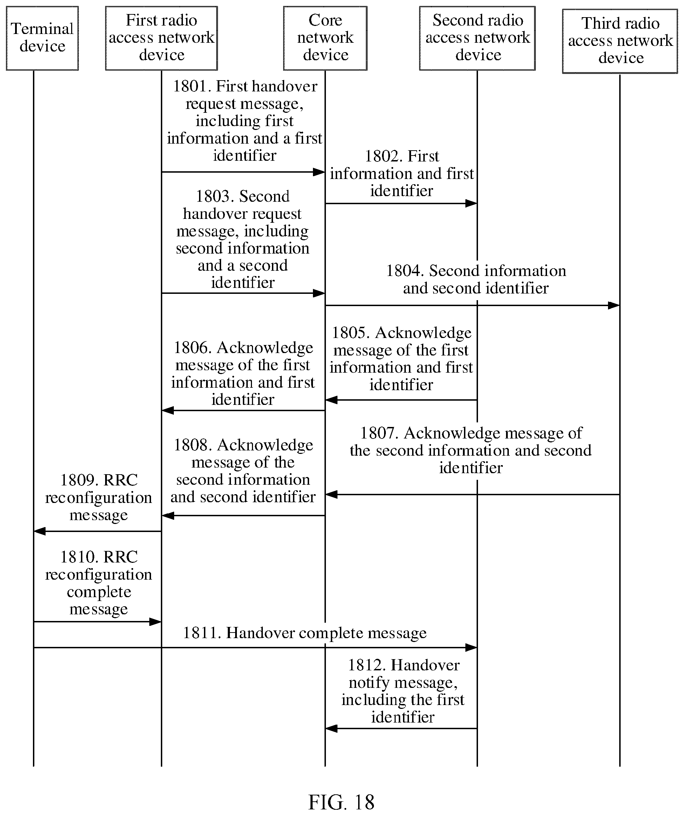

FIG. 18 is a schematic interaction flowchart of a cell handover method according to an embodiment of this application.

1801. A first radio access network device sends a first handover request message to a core network device, where the first handover request message includes first information and/or a first identifier, the first information indicates that a type of a handover of a terminal device to a second radio access network device is a conditional handover, and the first identifier is used to distinguish between a plurality of handover request messages sent by the first access network device to the core network device. The first radio access network device is a radio access network device currently accessed by the terminal device. Correspondingly, the core network device receives the first handover request message from the first radio access network device.

It may be understood that the handover request message carries a terminal-device-related identifier, for example, an identifier associated with the terminal device in an AMF on an NG interface, or an identifier associated with the terminal device on a base station side on the NG interface. The handover request message further carries a target base station identifier. The handover request message carries PDU-bearer-related information and direct data forwarding information. The handover request message further carries a container (container) transparently forwarded by a source base station to a target station, and the container includes handover-related content that needs to be transparently transmitted by the source station to the target station. Content included in a handover request is not described in the following again.

For example, the first information may be conditional handover request information, for example, a direct conditional handover request; the first information may be a conditional handover request type, for example, an initial CHO request or a CHO replacement request; or the first information may be identification information, for example, a target cell identifier, where the target cell identifier may be a PCI or a CGI. When the identification information is carried, it indicates a conditional handover. When the identification information is not carried, it indicates a conventional handover.

It may be understood that, when a handover type is a conventional handover, the first information is not carried. A specific form of the first information is not limited.

Optionally, the first handover request message further includes the first identifier, and the first identifier is used to identify the first handover request message.

A core network may distinguish, based on the first identifier, between a plurality of conditional handover request messages sent by the first access network device to the core network for a same target base station. When the core network cannot uniquely identify a conditional handover by using a target base station identifier and/or a terminal-device-related identifier in a handover request message, the core network may jointly identify a handover request by using the target base station identifier and/or the terminal-device-related identifier, and the first identifier, or the core network may uniquely identify a handover request by using only the first identifier.

For example, the first identification information may be a cell identifier of a target cell. For example, an identifier of a first cell may be a CGI of the cell, or may be a PCI of the cell. Alternatively, the first identification information may be other identification information. For example, the other identification information may be represented by a sequence number (1, 2, 3, 4, 5...) or a value.

It may be understood that the first information may be the same as the first identifier. For example, the first information is the first identifier, and the first identifier is the first information. The first information or the first identifier can be used by the core network to distinguish between an NG-interface-based conditional handover and a conventional handover, and can also be used by the core network to distinguish between a plurality of conditional handover request messages for different target cells of a same target station of a same terminal device from a same source base station. Alternatively, the first information may be different from the first identifier.

It may be understood that the first identification information may be included in the first information.

It may be understood that the first information may be included in the container transparently transmitted by the source base station to the target base station. In this way, the core network does not read the first information, and only transparently transmits the first information, and the target base station parses the first information. Alternatively, the first information may not be included in the container transparently transmitted by the source station to the target station. In this way, the core network may parse the first information. The first identification information may not be included in the container transparently transmitted by the source station to the target station, and the core network needs to parse out content of the first identifier.

All the foregoing handovers are handovers of a same terminal, and a plurality of conditional handovers are included in one round of handovers. The one round of handovers is all possible handover requests from a start point at which the terminal successfully performs access or a handover to an end point at which the terminal successfully performs a next handover. A base station may apply for a conditional handover and/or a conventional handover for the terminal in one round of handovers. This is applicable throughout this specification.

When receiving a handover request of the first access network device, the core network device needs to store a context of the terminal, including a security context. When storing the context, the core network needs identification information to uniquely identify the context. Therefore, the core network may use terminal-device-related identification information and/or base station identification information, and the first information and/or the first identifier as an identifier or a storage index, to store and query the context of the terminal device.

The functions of the first information and the first identifier are applicable throughout this specification, and all handover requests for triggering CHOs are based on a same principle. Details are not described in the following again. When there is no special description of carrying the first information or the first identifier, provided that a CHO handover is triggered, the first information or the first identifier is carried by default.

1802. The core network device sends the first information and/or the first identifier to the second radio access network device. Correspondingly, the second radio access network device receives the first information and/or the first identifier from the core network device. Optionally, when the first information is the same as the first identifier, it may be understood that the core network carries only the first information/first identifier.

It may be understood that the core network may directly forward the first information and the first identifier, or the core network may convert the received first information and first identifier into new first information and a new first identifier and send the new first information and the new first identifier to the second access network device. It may be understood that, when the first information and/or the first identifier are/is carried in the container transparently transmitted by the source station to the target station, the core network cannot perform conversion.

For example, the core network may distinguish between different handover procedure messages by allocating different NG interface identifiers AMF UE NGAP IDs to a same terminal. For example, the core network needs to initiate handover request messages to a cell 1 and a cell 2 of the target base station; and the core network allocates an identifier 1 to the cell 1, and the core network allocates an identifier 2 to the cell 2. It may be considered that the first identifier is a different NG interface identifier AMF UE NGAP ID allocated by the core network to a same terminal.

1803. The first radio access network device sends a second handover request message to the core network device, where the second handover request message includes second information and/or a second identifier, the second information indicates that a type of a handover of the terminal device to a third radio access network device is a conditional handover, and the second identifier is used to distinguish between a plurality of handover request messages sent by the first access network device to the core network device. Correspondingly, the core network device receives the second handover request message from the first radio access network device.

A sequence of 1802 and 1803 is not limited. 1802 may be performed before or after 1803, without a sequence limitation.

1804. The core network device sends the second information and/or the second identifier to the third radio access network device. Correspondingly, the second radio access network device receives the second information and/or the second identifier from the core network device.

1805. The second radio access network device sends an acknowledge message of the first information and/or the first identifier to the core network device. Correspondingly, the core network device receives the acknowledge message of the first information and/or the first identifier from the second radio access network device. A handover request acknowledge message received by the core network from the second access network device includes the first identifier and/or the acknowledge message of the first information, also referred to as acknowledge information of the first information.

It may be understood that the acknowledge information of the first information is that the second access network acknowledges, to the first access network device, that a CHO resource is successfully prepared, or a cell that successfully prepares for a CHO.

It may be understood that the acknowledge information of the first information is represented by the first information, in other words, the acknowledge information of the first information may be the same as the first information. It may be understood that the acknowledge message of the first information may be the same as the first identifier, or may be different from the first identifier.

1806. The core network device sends the acknowledge message of the first information and/or the first identifier to the first radio access network device.

1807. The third radio access network device sends an acknowledge message of the second information and/or the second identifier to the core network device. Correspondingly, the core network device receives the acknowledge message of the second information and/or the second identifier from the third radio access network device.

1808. The core network device sends the acknowledge message of the second information and/or the second identifier to the first radio access network device.

1809. The first radio access network device sends an RRC reconfiguration message to the terminal device. Correspondingly, the terminal device receives the RRC reconfiguration message.

1810. The terminal device sends an RRC reconfiguration complete message to the first radio access network device.

1811. After being handed over to the second radio access network device, the terminal device sends a handover complete message to the second radio access network device. Correspondingly, the second radio access network device receives the handover complete message from the terminal device.

1812. The second radio access network device sends a handover notify message to the core network device, where the handover notify message includes the first identifier, and the handover notify message indicates that the terminal device is successfully handed over to the second radio access network device.

The core network acknowledges, by using the first identifier, a base station to which a handover cancel message needs to be sent, and sends the handover cancel message to the corresponding base station.

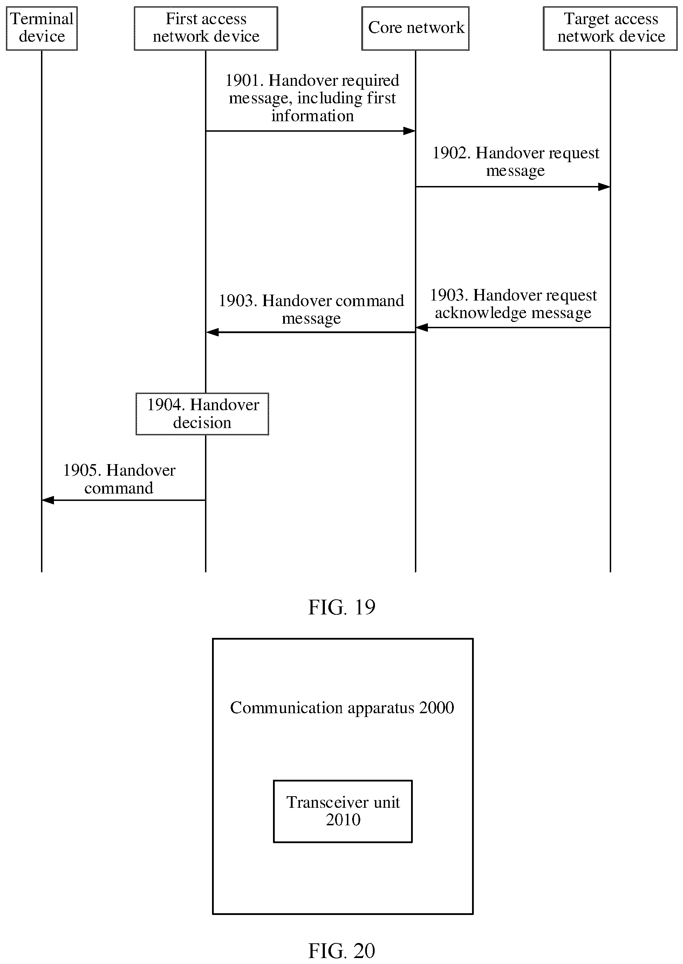

FIG. 19 is a schematic interaction flowchart of an enhanced handover method according to an embodiment of this application. In this embodiment, a first access network device is a source base station, a second access network device is a target access network device 1, and a third access network device is a target access network device 2. A difference between a first implementation and a second implementation of an enhanced handover is that there may be a plurality of candidate target cells in the first implementation, while there is only one target cell in the second implementation, and other procedures are the same.

1901. The first access network device sends a handover required (handover required) message to a core network, where the handover required message includes first information.

Correspondingly, the core network receives the handover required message from the first access network device. The handover required message carries the first information, and the first information indicates that a terminal device initiates an enhanced handover to a target access network device.

In the first implementation of the enhanced handover, the first access network device may send a plurality of handover required messages to the core network for a same terminal device, where the plurality of handover required messages correspond to different candidate target cells, to request a plurality of candidate target cells to reserve handover resources. For different candidate target cells, handover required messages sent by the first access network device include different content. For example, handover requirements carry different identifiers of candidate target cells. For example, the first access network device sends two handover required messages to the core network. One handover required message is used to request a resource of a second cell of the second access network device, and the second cell is a target cell to which the terminal device may be handed over. The other handover required message is used to request a resource of a third cell of the third access network device, and the third cell is a target cell to which the terminal device may be handed over. In this embodiment, neither a time sequence of sending the two handover required messages nor interval time between the two handover required messages is limited. In this embodiment, the first access network device and the core network are capable of processing parallel handover resource request procedures. This means that the first access network device may send a plurality of handover required messages to the core network, to request different cells of different candidate access network devices to reserve resources of the terminal device, or request different cells of a same access network device to reserve resources of the terminal device. Alternatively, the first access network device may send only one handover required message to the core network, to request a target cell in only one candidate access network device to reserve a resource of the terminal device. A quantity of candidate target cells is not limited in this embodiment of this application, and there may be one or more candidate target cells. When there is only one candidate target cell, the first access network device sends one handover required message. When there are a plurality of candidate target cells, the first access network device sends a plurality of handover required messages.

In the second implementation of the enhanced handover, the first access network device sends one handover required message to the core network for a same terminal, to request a resource of one target cell. For example, the first access network device initiates a handover required message to the core network, to request a resource of a second cell of the second access network device, where the second cell is a target cell to which the terminal device may be handed over.

The handover required message carries the first information, and the first information sent by the first access network device may be indication information, indicating that this handover is an enhanced handover. A specific form is not limited. For example, the first information may be a target cell identifier, and the target cell identifier may be a PCI or a CGI. A specific form is not limited. The target cell identifier is not included in a container that is in the handover required message and that is sent by the source access network device to the target access network device. Alternatively, the first information may be a handover type identifier. Alternatively, the first information may be information indicating time, and may indicate that the terminal device may access a corresponding cell within the time. For example, the first information may include information about a time point and information about duration, or may include information about one or more time points. The target access network device prepares a resource based on the first information. The prepared resource is used by the terminal device to perform the handover. The target access network device reserves a resource based on the first information. The reserved resource is used by the terminal device to perform the handover.

For example, in an NTN, due to high-speed movement of a satellite and predictability of ephemeris information, the source access network device may estimate information about time at which the terminal device may be handed over to a neighboring cell, and the source access network device may use the access time information as the first information. For example, the first information includes start time information T1 and duration duration, indicating that the terminal device may appear in a target cell in [T1, T1+duration]. Alternatively, the first information may include start time information T1 and end time information T2, and the terminal device may access a target cell in [T1, T2].

The first information may be included in the container provided by the source access network device for the target access network device, and the core network transparently transmits the first information to the target access network device without parsing the first information.

Alternatively, the first information may be not included in the container in the handover message, and may be forwarded by the core network to the target access network device, and the core network may parse the first information.

The handover required message sent by the first access network device further includes a target base station identifier, the container provided by the source access network device for the target access network device, bearer information, and the like. The message is used to request, on a target access network device side through the core network, to prepare a resource.

Generally, the first access network device sends a handover required message for each (candidate) target cell to the core network. The handover required message carries an identifier of the (candidate) target cell.

1902. The core network sends a handover request message to the target access network device, where the handover request message includes the first information.

It should be noted that the handover required message sent by the first access network device to the core network in step 1901 may be the same as or different from the handover request message sent by the core network to the target access network device in step 1902. For example, the core network sends, to the target access network device, information that is in the handover required message in step 1901 and that needs to be known by the target access network device. The handover request message may be a handover request message.

In the first implementation of the enhanced handover, the core network receives, from the first access network device, a plurality of handover required messages for a same terminal device, used to request a plurality of candidate target cells to prepare resources, and the core network sends corresponding handover request messages to candidate target access network devices to which the plurality of candidate target cells belong. For example, in step 1901, if the core network device receives a handover required message sent by the first access network device to the second cell of the second access network device, the core network sends a corresponding handover request message to the second access network device; or if the core network receives a handover required message sent by the first access network device to the third cell of the third access network device, the core network sends a corresponding handover request message to the third access network device.

In the second implementation of the enhanced handover, the core network receives one handover required message for a same terminal device from the source access network device, and the core network sends a handover request message to a corresponding target access network device. For example, in step 1901, if the core network device receives a handover required message sent by the first access network device to the second cell of the second access network device, the core network sends a corresponding handover request message to the second access network device.

The handover request message sent by the core network is used to request the target access network device to reserve a resource for the handover of the terminal device. The handover request message includes the first information, and the target access network device may reserve, based on the first information, a resource required by the terminal device for the handover, for example, information about a RACH resource required for accessing a target cell.

For example, the first information includes time-related information, for example, includes start time information T1 and duration duration, indicating that the terminal device may appear in the target cell in [T1, T1+duration]. The target access network device reserves the resource for the terminal device based on the first information in a plurality of resource reservation manners. In a possible manner, the target access network device reserves, for the terminal device in a time period from a time point at which the handover request message is received to T1+duration, the resource required for the handover. In other words, the target access network device reserves the resource for the terminal device when receiving the handover request message, and releases the resource at T1+duration. In another possible manner, the target access network device may reserve, for the terminal device in the time period [T1, T1+duration], the resource required by the terminal device to perform the handover. In another possible manner, the target device may reserve the resource for the terminal device in [T1, T1+duration+time period]. Optionally, when the target access network device determines that the terminal device does not access, within the time period or within a time period after the time period, the target cell corresponding to the target access network device, the target access network device may release the resource for the terminal device.

The target access network device determines, based on a quantity of terminal devices connected to the target access network device and other cases, whether to allow access of the terminal device. If the target access network device allows the access of the terminal device, the target access network device sends a handover request acknowledge message to the source access network device through the core network. The handover request acknowledge message includes a C-RNTI allocated to the terminal device, a security-related algorithm of the target access network device, and other parameters.

1903. The target access network device sends the handover request acknowledge (handover request acknowledge) message to the core network, the core network sends a corresponding handover command message to the first access network device, and the first access network device stores the handover resource or a handover command.

Correspondingly, the first access network device receives, through the core network, the handover resource prepared by the target access network device.

The handover request acknowledge message may be a handover request acknowledge message, and is sent by the target access network device to the core network, to notify the core network of the resource prepared on the target access network device side. The handover command message may be a handover command message, and is sent by the core network to the source access network device, to notify the source access network device that the handover resource has been prepared on the target access network device side.

It should be noted that the handover request acknowledge message may be the same as or may be different from the handover command message. For example, the core network sends, to the source access network device, information that is in the handover request acknowledge message and that needs to be known by the source access network device. Both the handover request message and the handover command message are specific to a same target cell, to be specific, when receiving a handover request acknowledge message of a target cell, the core network sends a handover command message of the corresponding cell to the source access network device.

Generally, the handover resource or the handover command received by the first access network device from the target access network device is specific to one (candidate) target cell. In other words, different (candidate) target cells correspond to different handover resources or handover commands.

**In** the first implementation of the enhanced handover in step 1901 and step 1902, the core network receives a handover acknowledge message that is sent by the second access network device and that indicates that the second cell prepares a resource, and the core network sends a handover command message for the second cell to the first access network device. The handover command message includes the handover resource reserved or prepared by the second cell for the terminal device. The core network receives a handover acknowledge message that is sent by the third access network device and that indicates that the third cell prepares a resource, and the core network sends a handover command message for the third cell to the first access network device. The handover command message includes the handover resource reserved or prepared by the third cell for the terminal device. The first access network device stores the handover command or the handover resource of the candidate target cell, and delays delivering the handover command or the handover resource to the terminal. For example, the first access network device stores a handover command or the handover resource of the second cell of the second access network device and a handover command or the handover resource of the third cell of the third access network device, and delays delivering the handover commands or the handover resources to the terminal device.

**In** the second implementation of the enhanced handover in step 1901 and step 1902, the core network receives a handover acknowledge message that is sent by the second access network device and that indicates that the second cell prepares a resource, and the core network sends a handover command message for the second cell to the first access network device. The handover command message includes the handover resource reserved or prepared by the second cell for the terminal device.

The first access network device stores the handover command or the handover resource of the target cell, and delays delivering the handover command or the handover resource to the terminal. For example, the first access network device stores a handover command or the handover resource of the second cell, and delays delivering the handover command or the handover resource to the terminal device.

1904. The first access network device makes a handover decision, and sends the handover command to the terminal device after determining to perform the handover.

When the first access network device determines that the terminal device needs to be handed over to a cell, the first access network device sends, to the terminal device, a handover command that corresponds to the cell and that is stored in step 1903. For example, if the first access network device determines to hand over the terminal device to the second cell of the second access network device, the first access network device sends, to the terminal device, the handover command that corresponds to the second cell and that is stored in step 1903.

Optionally, the first access network device evaluates, by using at least one of the following: the first information, signal quality of the terminal device, remaining coverage time of a serving cell, a location of the terminal device in the serving cell, and the like, whether the terminal device needs to perform a handover.

When the first access network device determines to initiate a handover of the terminal device, and hand over the terminal device to the second cell of the second access network device, the first access network device sends the stored handover command or handover resource of the second cell of the second access network device to the terminal device.

Optionally, after the first access network device sends the handover command to the terminal device, for the terminal device, when the first access network device further stores a handover resource or a handover command of another access network device, the first access network device may delete the handover command. Alternatively, the first access network device may initiate a handover cancel message to an unselected (candidate) target access network device through the core network, to notify the target access network device to delete a resource reserved for the terminal device. A form of sending the message is not limited. Alternatively, it may be understood that the first access network device may initiate, through the core network, a handover cancel message to an access network device to which an unselected (candidate) target cell belongs, to notify the corresponding access network device to release or delete a resource reserved for the terminal device to access the corresponding (candidate) target cell.

For example, in the first implementation of the enhanced handover, if the first access network device selects the second cell of the second access network device as the target cell, the first access network device sends, to the terminal device, the handover command that is of the second cell and that is stored in step 1903. Optionally, the first access network device sends a handover cancel message to the third cell of the third access network device, to notify the third access network device to release the resource reserved for the terminal device, and the first access network device deletes the handover command or the handover resource that is of the third cell and that is stored for the terminal device.

In the second implementation of the enhanced handover, if the first access network device determines to initiate a handover to the second cell of the second access network device, the first access network device sends, to the terminal device, the handover command that is of the second cell and that is stored in step 1903.

Optionally, before the first access network device determines the enhanced handover, the first access network device determines to initiate a common handover for the terminal device. In this case, the first access network device may release the handover command or the handover resource stored in step 1903, to be specific, may release the handover command or the handover resource stored in step 1903 for the enhanced handover. Alternatively, the first access network device may initiate a handover cancel message to a (candidate) target cell that has prepared an enhanced handover resource for the terminal device or an access network device to which the (candidate) target cell belongs, to release or delete the resource reserved for the terminal device.

For example, the first information includes start time information T1 and duration duration, indicating that the terminal may appear in the target cell in [T1, T1+duration]. For example, the first access network device determines, at the moment T1, to initiate a handover of the terminal device and hand over the terminal device to the target cell of the second access network device, and the first access network device sends the handover command to the terminal device. Considering a transmission delay of sending the handover command by the first access network device to the terminal device and a transmission delay of sending an access message by the terminal device to the base station, the first access network device may send the handover command to the terminal device at a moment T1-RTT at the earliest. The first access network device may estimate the RTT delay between the terminal device and the first access network device by using a timing advance (timing advance, TA) value reported by the terminal device. For another example, the first access network device may send the handover command to the terminal device at T1 - the transmission delay from the first access network device to the terminal device at the earliest, so that the terminal device accesses the target access network device at or after the moment T1, or the first access network device ensures that a moment at which an uplink signal of the terminal device arrives at the target cell is T1 or later than T1.

The handover command includes the parameters in the handover request acknowledge message. It is equivalent that the first access network device performs transparent transmission. Specifically, the handover command includes related information of the target cell and a related configuration parameter required for accessing the target cell by the terminal device. For example, the handover command includes a PCI of the target cell, frequency information of the target cell (a frequency channel number of the target cell), a C-RNTI allocated by the target cell to the terminal device, a random access channel RACH resource required for accessing the target cell, and other information.

The first access network device may start data forwarding to the corresponding target access network device when receiving the handover command from the core network, or the first access network device may start data forwarding to the target access network device when delivering the handover command to the terminal device. A specific start time point and form of the data forwarding are not limited.

1905. The terminal device receives the handover command from the first access network device, and initiates access to the target cell based on the handover command.

In the enhanced handover, because an interaction procedure between the source access network device and the core network and an interaction procedure between the core network and the target access network device are prepared in advance, after determining to hand over the terminal device, the source access network device may deliver the handover command in time, thereby reducing time required for a handover procedure.

FIG. 20 is a block diagram of a communication apparatus 2000 according to an embodiment of this application. The apparatus may be used in or deployed in the core network device in the method embodiment in FIG. 9. The communication apparatus 2000 includes:
a transceiver unit 2010, configured to receive a first handover request message from a first radio access network device, where the first handover request message includes identification information of a second access network device and first information, and the first information indicates that a type of a handover of a terminal device to the second access network device is a conditional handover.

The transceiver unit 2010 is further configured to send first security information and the first information to the second access network device.

The transceiver unit 2010 is further configured to receive a second handover request message from the first access network device, where the second handover request message includes identification information of a third access network device.

The transceiver unit 2010 is further configured to: if the identification information of the third access network device is the same as the identification information of the second access network device, send the first security information to the third access network device.

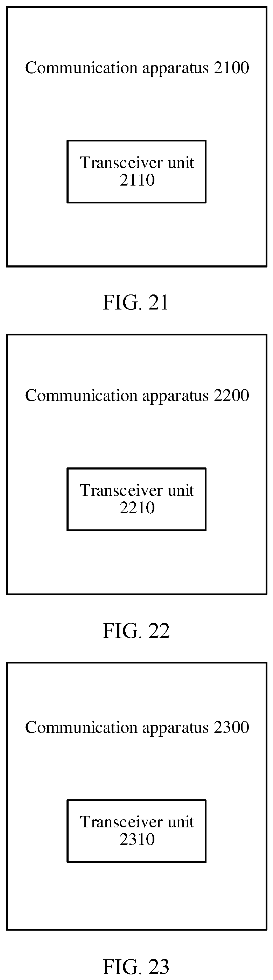

FIG. 21 is a block diagram of a communication apparatus 2100 according to an embodiment of this application. The apparatus may be used in or deployed in the core network device in the method embodiment in FIG. 13. The communication apparatus 2100 includes:
a transceiver unit 2110, configured to receive a first handover request message from a first access network device, where the first handover request message includes identification information of a service of a second access network device and first information, and the first information indicates that a type of a handover of a terminal device to the second access network device is a conditional handover.

The transceiver unit 2110 is further configured to send first security information and the first information to the second access network device, where the first security information includes a first value of a first next hop chaining count NCC and first indication information, and the first indication information is used by the terminal device to determine a key of the second access network device; or the first security information includes the first value of the first NCC and a second value of a second NCC, and a maximum value of the second NCC is greater than a maximum value of the first NCC.

FIG. 22 is a block diagram of a communication apparatus 2200 according to an embodiment of this application. The apparatus may be used in or deployed in the core network device in the method embodiment in FIG. 15. The communication apparatus 2200 includes:
a transceiver unit 2210, configured to receive a handover request message from a first access network device, where the handover request message includes identification information of a second access network device and first information, and the first information indicates that a type of a handover of a terminal device to the second access network device is a conditional handover.

The transceiver unit 2210 is further configured to: if the core network device updates a key K_{AMF}, send a handover reject message to the first access network device.

FIG. 23 is a block diagram of a communication apparatus 2300 according to an embodiment of this application. The apparatus may be used in or deployed in the core network device in the method embodiment in FIG. 16. The communication apparatus 2300 includes:
a transceiver unit 2310, configured to receive a handover request message from a first access network device, where the handover request message includes identification information of a second access network device and first information, and the first information indicates that a type of a handover of a terminal device to the second access network device is a conditional handover.

The transceiver unit 2310 is further configured to: if the communication apparatus 2200 determines to derive a K_{AMF} key, send first security information and the first information to the second access network device, where the first security information is determined based on a key K_{AMF} used before the derivation.

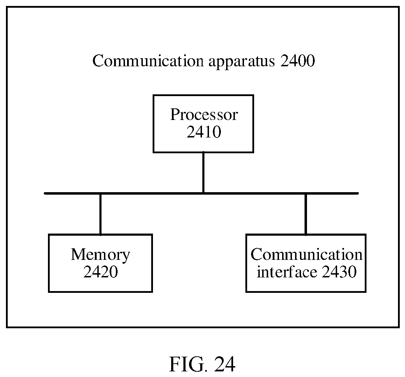

FIG. 24 is a block diagram of a communication apparatus 2400 according to an embodiment of this application.

The communication apparatus 2400 includes a processor 2410, a memory 2420, and a communication interface 2430.

The memory 2420 is configured to store executable instructions.

The processor 2410 is coupled to the memory 2420 through the communication interface 2430. The processor 2410 is configured to: invoke and run the executable instructions in the memory 2420, to implement the method in embodiments of this application. The communication apparatus may be used in the terminal device or the network device in embodiments of this application. Optionally, the processor 2410 and the memory 2420 are integrated together.

The processor 2410 may be an integrated circuit chip and has a signal processing capability. In an implementation process, the steps in the foregoing method embodiments may be implemented by using an integrated logic circuit of hardware in the processor, or instructions in a form of software. The processor may be a general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, the steps, and the logical block diagrams disclosed in embodiments of this application. The general purpose processor may be a microprocessor, or the processor may be any conventional processor or the like. The steps in the methods disclosed with reference to embodiments of this application may be directly performed by a hardware decoding processor, or may be performed by a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware in the processor.

Optionally, an embodiment of this application further provides a communication device. The communication device includes an input/output interface and a logic circuit. The input/output interface is configured to obtain input information and/or output information. The logic circuit is configured to: perform the method in any one of the foregoing method embodiments, and perform processing based on the input information and/or generate output information.

An embodiment of this application provides a communication system, including the terminal device, the core network device, the first access network device, the second access network device, and the third access network device in the cell handover method in embodiments of this application.

An embodiment of this application further provides a computer-readable storage medium. The computer-readable storage medium stores a computer program used to implement the method in the foregoing method embodiments. When the computer program is run on a computer, the computer is enabled to implement the method in the foregoing method embodiments.

An embodiment of this application further provides a computer program product. The computer program product includes computer program code. When the computer program code is run on a computer, the method in the foregoing method embodiments is performed.

An embodiment of this application further provides a chip, including a processor. The processor is connected to a memory, the memory is configured to store a computer program, and the processor is configured to execute the computer program stored in the memory, to enable the chip to perform the method in the foregoing method embodiments.

It should be understood that, in embodiments of this application, numbers "first", "second", and the like are only used to distinguish between different objects, for example, to distinguish between different access network devices or information, and do not constitute a limitation on the scope of embodiments of this application. Embodiments of this application are not limited thereto.

In addition, the term "and/or" in this application describes only an association relationship between associated objects and indicates that three relationships may exist. For example, A and/or B may represent the following three cases: Only A exists, both A and B exist, and only B exists. In addition, the character "/" in this specification generally indicates an "or" relationship between the associated objects. In this application, the term "at least one" may indicate "one" or "two or more". For example, at least one of A, B, and C may indicate the following seven cases: Only A exists, only B exists, only C exists, both A and B exist, both A and C exist, both C and B exist, and A, B, C all exist.

A person of ordinary skill in the art may be aware that, in combination with the examples described in embodiments disclosed in this specification, units and algorithm steps can be implemented by using electronic hardware or a combination of computer software and electronic hardware. Whether the functions are performed by using hardware or software depends on particular applications and design constraint conditions of the technical solutions. A person skilled in the art may use different methods to implement the described functions for each particular application, but it should not be considered that this implementation goes beyond the scope of this application.

It may be clearly understood by a person skilled in the art that, for the purpose of convenient and brief description, for specific working processes of the foregoing system, apparatus, and unit, refer to corresponding processes in the foregoing method embodiments. Details are not described herein again.

In the several embodiments provided in this application, it should be understood that the disclosed system, apparatus and method may be implemented in other manners. For example, the apparatus embodiments described above are merely examples. For example, division into the units is merely logical function division and there may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

The units described as separate parts may or may not be physically separate, and the parts displayed as units may or may not be physical units, to be specific, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A cell handover method, wherein the method is applied to a core network device and comprises:
receiving a first handover request message from a first radio access network device, wherein the first handover request message comprises identification information of a second access network device and first information, and the first information indicates that a type of a handover of a terminal device to the second access network device is a conditional handover;
sending first security information and the first information to the second access network device;
receiving a second handover request message from the first access network device, wherein the second handover request message comprises identification information of a third access network device; and
if the identification information of the third access network device is the same as the identification information of the second access network device, sending the first security information to the third access network device.

2. The method according to claim 1, wherein the method further comprises:
if the identification information of the third access network device is different from the identification information of the second access network device, sending second security information to the third access network device.

3. The method according to claim 1, wherein the method further comprises:
if the identification information of the third access network device is different from the identification information of the second access network device, sending the first security information to the third access network device.

4. The method according to any one of claims 1 to 3, wherein
the second handover request message further comprises second information, and the second information indicates that a type of a handover of the terminal device to the third access network device is a conditional handover.

5. The method according to any one of claims 1 to 4, wherein the first security information comprises first key information, and the second security information comprises second key information.

6. The method according to any one of claims 1 to 5, wherein
the first handover request message further comprises a first identifier, and the first identifier is used to identify the first handover request message; and
the second handover request message further comprises a second identifier, and the second identifier is used to identify the second handover request message.

7. The method according to claim 6, wherein
the sending first security information and the first information to the second access network device comprises: sending the first security information, the first information, and the first identifier to the second access network device; and
the sending second security information to the third radio access network device comprises: sending the second security information and the second identifier to the third radio access network device.

8. A cell handover method, wherein the method is applied to a core network device and comprises:
receiving a first handover request message from a first access network device, wherein the first handover request message comprises identification information of a service of a second access network device and first information, and the first information indicates that a type of a handover of a terminal device to the second access network device is a conditional handover; and
sending first security information and the first information to the second access network device, wherein the first security information comprises a first value of a first next hop chaining count NCC and first indication information, and the first indication information is used by the terminal device to determine a key of the second access network device; or the first security information comprises the first value of the first NCC and a second value of a second NCC, and a maximum value of the second NCC is greater than a maximum value of the first NCC.

9. The method according to claim 8, wherein
the first indication information is an extended bit of the first NCC.

10. The method according to claim 8, wherein
the first indication information indicates a round of deriving the first NCC.

11. A cell handover method, wherein the method is applied to a core network device and comprises:
receiving a handover request message from a first access network device, wherein the handover request message comprises identification information of a second access network device and first information, and the first information indicates that a type of a handover of a terminal device to the second access network device is a conditional handover; and
if a key K_{AMF} is updated, sending a handover reject message to the first access network device.

12. The method according to claim 11, wherein
the handover reject message carries third indication information, and the third indication information indicates a reject cause.

13. The method according to claim 11 or 12, wherein
the reject cause comprises: being to perform a context change procedure of the terminal device or being to perform key synchronization with the terminal device.

14. The method according to any one of claims 11 to 13, wherein after the sending a handover reject message to the first access network device, the method further comprises:
sending a context update request message of the terminal device to the first access network device, wherein the context update request message of the terminal device comprises first security information, and the first security information is determined based on an updated key K_{AMF}.

15. A cell handover method, wherein the method is applied to a core network device and comprises:
receiving a handover request message from a first access network device, wherein the handover request message comprises identification information of a second access network device and first information, and the first information indicates that a type of a handover of a terminal device to the second access network device is a conditional handover; and
if it is determined to derive a key K_{AMF}, sending first security information and the first information to the second access network device, wherein the first security information is determined based on a key K_{AMF} used before the derivation.

16. The method according to claim 15, wherein the method further comprises:
receiving a handover notify message from the second access network device, wherein the handover notify message indicates that the terminal device has completed the handover to the second access network device;
deriving a new key K_{AMF}; and
sending a context update request message of the terminal device to the second access network device, wherein the context update request message of the terminal device comprises second security information, and the second security information is determined based on the new key K_{AMF}.

17. The method according to claim 15 or 16, wherein the method further comprises:
if it is determined not to derive a key K_{AMF}, sending the first security information and the first information to the second access network device.

18. The method according to claim 16 or 17, wherein the first security information comprises first key information, and the second security information comprises second key information.

19. A communication apparatus, comprising a unit configured to implement the function in the method according to any one of claims 1 to 18.

20. A communication apparatus, comprising a processor and a memory, wherein the memory is configured to store a computer program, and the processor is configured to execute the computer program stored in the memory, to enable the communication apparatus to perform the method according to any one of claims 1 to 18.

21. A computer-readable storage medium, wherein
the computer-readable medium stores a computer program; and
when the computer program is run on a computer, the computer is enabled to perform the method according to any one of claims 1 to 18.

22. A computer program product, comprising a computer program, wherein when the computer program is executed, the method according to any one of claims 1 to 18 is implemented.
